# EUROPÄISCHE PATENTSCHRIFT

(11) **EP 2 309 028 B1**
(45) Veröffentlichungstag und Bekanntmachung des Hinweises auf die Patenterteilung: **15.01.2020**
(21) Anmeldenummer: 10011989.0
(22) Anmeldetag: 09.11.2005
(51) Int. Cl.: C23C 22/36, C23C 22/34, C09D 5/12, C23C 22/68

(54) **Verfahren zur Beschichtung von metallischen Oberflächen mit einer wässerigen Silan /Silanol /Siloxan /Polysiloxan enthaltenden Zusammensetzung und diese Zusammensetzung**
Method for coating metallic surfaces with silane /silanole / siloxane/ polysiloxane containing aqueous composition and this composition
Procédé de revêtement de surfaces métalliques avec une composition aqueuse contenant du silane / silanole /siloxane /polysiloxane et cette compostion

(30) Priorität: 10.11.2004 US 985652; 04.04.2005 DE 102005015573; 04.04.2005 DE 102005015576; 04.04.2005 DE 102005015575
(43) Veröffentlichungstag der Anmeldung: 13.04.2011
(62) Teilanmeldung aus: 05807715.7
(73) Patentinhaber: Chemetall GmbH, 60487 Frankfurt (DE)
(72) Erfinder: Kolberg, Thomas, 64646 Heppenheim (DE); Walter, Manfred, 63452 Hanau (DE); Schubach, Peter, Dr., 61130 Nidderau/Windecken (DE)
(74) Vertreter: BASF IP Association

(56) Entgegenhaltungen:
- EP-A- 0 949 353
- EP-A- 0 952 193
- EP-A- 1 130 133
- EP-A- 1 146 144
- EP-A- 1 426 466
- EP-A- 1 433 877
- EP-A- 1 433 878
- WO-A2-02/24344
- DE-A1- 10 149 148
- GB-A- 1 528 715

## Beschreibung

Die Erfindung betrifft ein Verfahren zur Beschichtung von metallischen Oberflächen mit einer wässerigen Zusammensetzung, die mindestens ein Silan oder/und eine hierzu verwandte Verbindung und weitere Komponenten enthält. Ferner betrifft die Erfindung entsprechende wässerige Zusammensetzungen sowie die Verwendung der nach dem erfindungsgemäßen Verfahren beschichteten Substrate.

Die bislang am häufigsten eingesetzten Verfahren zur Behandlung von metallischen Oberflächen, insbesondere von Teilen, Band (Coil) oder Bandabschnitten aus mindestens einem metallischen Werkstoff, bzw. zur Vorbehandlung von metallischen Oberflächen vor der Lackierung von metallischen Oberflächen basieren vielfach einerseits auf dem Einsatz von Chrom(VI)-Verbindungen gegebenenfalls zusammen mit diversen Zusatzstoffen oder andererseits auf Phosphaten wie z.B. ZinkManganNickel-Phosphaten gegebenenfalls zusammen mit diversen Zusatzstoffen.

Aufgrund der toxikologischen und ökologischen Risiken, die insbesondere Chromat-haltige Verfahren oder Nickel-haltige Verfahren mit sich bringen, wird schon seit vielen Jahren nach Alternativen zu diesen Verfahren auf allen Gebieten der Oberflächentechnik für metallische Substrate gesucht, aber trotzdem immer wieder gefunden, dass bei vielen Anwendungen völlig Chromat-freie oder Nickel-freie Verfahren nicht 100 % des Leistungsspektrums erfüllen oder nicht mit der gewünschten Sicherheit erfüllen. Es wird dann versucht, die Chromatgehalte bzw. Nickelgehalte möglichst gering zu halten und so weit als möglich Cr⁶⁺ durch Cr³⁺ zu ersetzen. Es sind insbesondere in der Automobilindustrie z.B. für die Vorbehandlung von Karosserien vor der Lackierung hochwertige Phosphatierungen im Einsatz, die den Korrosionsschutz der Automobile auf einem hohen Qualitätsstand gehalten haben. Hierzu werden üblicherweise ZinkManganNickel-Phosphatierungen eingesetzt. Trotz vieler Jahre an Forschung und Entwicklung ist es nicht gelungen, für Multimetall-Anwendungen wie oft bei Karosserien, wo in Europa typischerweise im gleichen Bad metallische Oberflächen von Stahl, von verzinktem Stahl und Aluminium bzw. Aluminiumlegierungen vorbehandelt werden, ohne deutliche Qualitätseinschränkungen Nickel-frei zu phosphatieren. Da jetzt aber Nickel-Gehalte, selbst wenn sie vergleichsweise gering sind, in absehbarer Zeit toxikologisch bedenklicher eingestuft werden, stellt sich die Frage, ob mit anderen chemischen Verfahren ein gleichwertiger Korrosionsschutz erzielt werden kann.

Der Einsatz z.B. von Silanen/Silanolen in wässerigen Zusammensetzungen zur Herstellung von Siloxan/Polysiloxan-reichen korrosionsschützenden Beschichtungen ist grundsätzlich bekannt. Der Einfachheit halber wird bei Silan/Silanol/Siloxan/Polysiloxan im folgenden oft nur von Silan gesprochen. Diese Beschichtungen haben sich bewährt, jedoch sind die Verfahren zur Beschichtung mit einer vorwiegend Silan neben Lösemittel(n) enthaltenden wässerigen Zusammensetzung teilweise schwierig anzuwenden. Nicht immer werden diese Beschichtungen mit hervorragenden Eigenschaften ausgebildet. Außerdem kann es hierbei Probleme geben, die sehr dünnen transparenten Silan-Beschichtungen auf dem metallischen Untergrund sowie deren Fehlstellen mit bloßem Auge oder mit optischen Hilfsmitteln ausreichend charakterisieren zu können. Der Korrosionsschutz und die Lackhaftung der gebildeten Siloxan- oder/und Polysiloxan-reichen Beschichtungen sind oft, aber nicht immer hoch und teilweise auch bei geeigneter Applikation für bestimmte Anwendungen nicht ausreichend hoch. Es bedarf weiterer Verfahren unter Einsatz von mindestens einem Silan, die eine hohe Verfahrenssicherheit und eine hohe Qualität der hiermit hergestellten Beschichtungen insbesondere bezüglich Korrosionsbeständigkeit und Lackhaftung aufweisen.

Bei der Gestaltung Silan-haltiger wässeriger Zusammensetzungen hat sich außerdem eine kleine bzw. große Zugabemenge an mindestens einer Komponente ausgewählt aus der Gruppe von organischen Monomeren, Oligomeren und Polymeren bewährt. Bei derartigen Zusammensetzungen ist die Art und Menge der Silan-Zugabe teilweise von entscheidender Bedeutung für den Erfolg. Üblicherweise sind jedoch die Zugabemengen an Silan hierzu vergleichsweise gering - meistens nur bis zu 5 Gew.-% aller Feststoffgehalte - und wirken dann als "coupling agent", wobei die haftvermittelnde Wirkung insbesondere zwischen metallischem Substrat und Lack und ggf. zwischen Pigment und organischen Lackbestandteilen vorherrschen sollte, aber untergeordnet teilweise auch eine geringe vernetzende Wirkung auftreten kann. Vorwiegend werden sehr geringe Silan-Zusätze zu thermisch härtbaren Harzsystemen zugegeben.

Aus EP 1 017 880 B1 ist bekannt, eine wässerige Zusammensetzung mit einem teilweise hydrolysierten Aminosilan und mit einer Fluor enthaltenden Säure im Mischungsverhältnis 1 : 2 bis 2 : 1 einzusetzen. Diese Säure ist vorzugsweise Fluortitansäure. Die damit hergestellten Beschichtungen sind gut, erfüllen aber nicht die Voraussetzungen für hochwertige korrosionsbeständige Beschichtungen wie bei den außerordentlich hochwertigen Phosphatbeschichtungen im Automobilbau auf Basis von ZinkManganNickel-Phosphat, insbesondere für Multimetall-Anwendungen. Die Publikation gibt keinen Hinweis, dass eine Kombination von mehreren Säuren vorteilhaft sein kann.

DE 101 49 148 A1 offenbart Beschichtungsverfahren mit wässerigen Zusammensetzungen auf Basis von organischem Filmbildner, anorganischen Partikeln und Gleitmittel. GB 1 528 715 A lehrt wässerige Zusammensetzungen, die Polyvinylbutyralharz, organofunktionelles Silan, wenigstens ein Borat oder Polyphosphat sowie Phosphorsäure enthalten. EP 1 433 878 A1 offenbart chemische Konversionsbeschichtungsmittel, die neben Ti/Zr/Hf und Fluor eine wasserlösliche Epoxidverbindung enthalten. EP 0 949 353 A1 beschreibt wässerige Zusammensetzungen auf Basis von bestimmten Kationen, Fluor-haltiger Säure/Phosphorsäure/Essigsäure, ein oder zwei Silanvernetzungsmitteln und spezifischem wasserlöslichen Polymer. EP 1 146 144 A1 bezieht sich auf wässerige Zusammensetzungen auf Basis von Al-, Mg- und Mn-Ionen und wasserlöslichem organischen Harz und Säure, wobei keine Ti- oder Zr-haltige Säuren angeführt werden. WO 02/24344 A2 betrifft Verfahren zur Beschichtung eines metallischen Bandes mit bzw. ohne vorheriges Aufbringen einer Korrosionsschutzschicht, wobei das Band mit einer lackähnlichen Polymer-haltigen Schicht auf Basis von UVvernetzbarem Wasser-basierten Harz, Wachs, Photoinitiator und Korrosionsinhibitor überzogen wird. EP 1 426 466 A1 beschreibt wässerige Zusammensetzungen auf Basis von zwei verschiedenen Harzen sowie Kationen, die gegebenenfalls Säure oder/und Silanvernetzungsmittel enthalten.

Es bestand daher die Aufgabe, wässerige Zusammensetzungen vorzuschlagen, die auf einer umweltfreundlichen chemischen Zusammensetzung beruhen und eine hohe Korrosionsbeständigkeit gewährleisten, die auch in Multimetallanwendungen, in denen z.B. Stahl und Zink-reiche metallische Oberflächen und gegebenenfalls auch Aluminium-reiche metallische Oberflächen im gleichen Bad behandelt oder vorbehandelt werden, geeignet sind. Außerdem bestand die Aufgabe, wässerige Zusammensetzungen vorzuschlagen, die sich zur Beschichtung von Karosserien im Automobilbau eignen.

Es wurde jetzt gefunden, dass der Zusatz von mindestens einem Komplexfluorid hilft, Beeinträchtigungen der Anbindung von Silan an die metallische Oberfläche zu minimieren bzw. zu vermeiden, so dass das Spülen sich nicht oder nur geringfügig beeinträchtigend auswirken kann.

Es wurde jetzt auch gefunden, dass eine Kombination von mindestens zwei Komplexfluoriden, insbesondere von Fluortitansäure und von Fluorzirkoniumsäure, eine außerordentliche Qualitätssteigerung der Beschichtung ermöglicht.

Es wurde jetzt gefunden, dass eine Kombination von mindestens einem Komplexfluorid, insbesondere von Fluortitansäure oder/und von Fluorzirkoniumsäure, mit einem Silan, mit Mangankationen und mit mindestens einer weiteren Substanz z.B. mit einer Aminogruppe, mit einem Nitrit, mit einem Peroxid oder/und mit einem Phosphat eine sehr deutliche Qualitätssteigerung der Beschichtung gewährleistet und dass diese zuletzt genannten Substanzen noch eine weitere Verbesserung ermöglichen.

Es wurde jetzt gefunden, dass es nicht nur möglich ist, frisch applizierte und noch nicht durchgetrocknete und daher noch nicht stärker kondensierte Beschichtungen auf Basis von Silan zu spülen, sondern dass diese Verfahrensabfolge sogar vorteilhaft ist, weil die derart hergestellten und gespülten Beschichtungen teilweise unabhängig von der chemischen Zusammensetzung des wässerigen Bades sogar einen besseren Korrosionsschutz und eine bessere Lackhaftung aufweisen. Dies widerspricht früheren Erfahrungen, nach denen ein Spülen einer frisch applizierten und noch nicht stärker getrockneten Beschichtung auf Basis von Silan leicht und oft zu einer Beeinträchtigung der Schichtqualität, wenn nicht sogar zum teilweisen oder vereinzelt zum vollständigen Entfernen der Beschichtung führt.

Es wurde jetzt auch gefunden, dass es möglich und vorteilhaft ist, auf frisch applizierte und noch nicht durchgetrocknete und daher noch nicht stärker kondensierte Beschichtungen auf Basis von Silan, die gegebenenfalls auch in diesem Zustand gespült wurden, einen Lack, eine lackähnliche Beschichtung, einen Primer oder einen Klebstoff zu applizieren. Die Applikation derartiger Zusammensetzungen auf Silan-basierte Nassfilme ist vorteilhaft, weil die derart hergestellten und gespülten Beschichtungen teilweise unabhängig von der chemischen Zusammensetzung des wässerigen Bades sogar einen besseren Korrosionsschutz und eine bessere Lackhaftung aufweisen.

Die Aufgabe wird gelöst mit einem Verfahren zur Beschichtung von metallischen Oberflächen mit einer Silan/Silanol/Siloxan/Polysiloxan enthaltenden Zusammensetzung, wobei die Zusammensetzung:
a) mindestens eine Verbindung a) ausgewählt aus Silanen, Silanolen, Siloxanen und Polysiloxanen, wobei die Zusammensetzung einen Gehalt an Silan/Silanol/Siloxan/Polysiloxan im Bereich von 0,02 bis 2 g/L aufweist, berechnet auf der Basis der entsprechenden Silanole,
b) mindestens eine Titan-, Hafnium-, Zirkonium-, Aluminium- oder/und Bor-haltigen Verbindung b), von denen mindestens eine ein Komplexfluorid ist, wobei die Zusammensetzung einen Gehalt an Verbindungen b) im Bereich von 0,1 bis 5 g/L aufweist, berechnet als Summe der entsprechenden Metalle,
c) Mangankationen oder/und mindestens eine entsprechende Verbindung c), wobei die Zusammensetzung einen Gehalt an Mangankationen oder/und entsprechender Verbindung c) im Bereich von 0,08 bis 0,3 g/L aufweist berechnet als Mangan,
sowie mindestens eine Substanz d) enthält ausgewählt aus:
d₁) Aminoguanidin,
d₂) Anionen von Nitrit oder/und Verbindungen mit mindestens einer Nitro-Gruppe,
d₃) Verbindungen auf Basis von Peroxid und
d₄) Phosphor-haltigen Verbindungen, Anionen von mindestens einem Phosphat oder/und Anionen von mindestens einem Phosphonat sowie außerdem
e) Wasser enthält,
wobei der Gehalt an allen Arten der Substanzen d) im Bereich von 0,01 bis 25 g/L liegt,
wobei die Zusammensetzung einen Gehalt an Nitrat im Bereich von 0,1 bis 5 g/L aufweist.

Die Aufgabe wird auch gelöst mit einer wässerigen Zusammensetzung zur Beschichtung von metallischen Oberflächen, die:
a) mindestens eine Verbindung a) ausgewählt aus Silanen, Silanolen, Siloxanen und Polysiloxanen, wobei die Zusammensetzung einen Gehalt an Silan/Silanol/Siloxan/Polysiloxan im Bereich von 0,02 bis 2 g/L aufweist, berechnet auf der Basis der entsprechenden Silanole,
b) mindestens eine Titan-, Hafnium-, Zirkonium-, Aluminium- oder/und Bor-haltigen Verbindung b), von denen mindestens eine ein Komplexfluorid ist, wobei die Zusammensetzung einen Gehalt an Verbindungen b) im Bereich von 0,1 bis 5 g/L aufweist, berechnet als Summe der entsprechenden Metalle,
c) Mangankationen oder/und mindestens eine entsprechende Verbindung c), wobei die Zusammensetzung einen Gehalt an Mangankationen oder/und entsprechender Verbindung c) im Bereich von 0,08 bis 0,3 g/L aufweist berechnet als Mangan,
sowie mindestens eine Substanz d) enthält ausgewählt aus:
d₁) Aminoguanidin,
d₂) Anionen von Nitrit oder/und Verbindungen mit mindestens einer Nitro-Gruppe,
d₃) Verbindungen auf Basis von Peroxid und
d₄) Phosphor-haltigen Verbindungen, Anionen von mindestens einem Phosphat oder/und Anionen von mindestens einem Phosphonat sowie außerdem
e) Wasser enthält,
wobei der Gehalt an allen Arten der Substanzen d) im Bereich von 0,01 bis 25 g/L liegt,
wobei die Zusammensetzung einen Gehalt an Nitrat im Bereich von 0,1 bis 5 g/L aufweist.

Der Begriff "Silan" wird hierbei für Silane, Silanole, Siloxane, Polysiloxane und deren Reaktionsprodukte bzw. Derivate benutzt, die dabei auch oft "Silan"-Gemische sind. Der Begriff "Kondensieren" im Sinne dieser Anmeldung bezeichnet alle Formen der Vernetzung, der Weitervernetzung und der weiteren chemischen Reaktionen der Silane/Silanole/Siloxane/Polysiloxane. Der Begriff "Beschichtung" im Sinne dieser Anmeldung bezieht sich auf die mit der wässerigen Zusammensetzung ausgebildete Beschichtung einschließlich des Nassfilms, des angetrockneten Films, des durchgetrockneten Films, des bei erhöhter Temperatur getrockneten Films und des gegebenenfalls thermisch oder/und durch Bestrahlung weiter vernetzten Films.

Die wässerige Zusammensetzung ist eine wässerige Lösung, eine wässerige Dispersion oder/und eine Emulsion. Vorzugsweise ist der pH-Wert der wässerigen Zusammensetzung größer als 1,5 und kleiner als 9, besonders bevorzugt im Bereich von 2 bis 7, ganz besonders bevorzugt im Bereich von 2,5 bis 6,5, insbesondere im Bereich von 3 bis 6.

Besonders bevorzugt wird der wässerigen Zusammensetzung mindestens ein Silan oder/und mindestens eine entsprechende Verbindung mit mindestens einer Aminogruppe, mit mindestens einer Harnstoffgruppe oder/und mit mindestens einer Ureidogruppe zugesetzt, da die hiermit hergestellten Beschichtungen oft eine höhere Lackhaftung oder/und eine höhere Affinität zur nachfolgenden Lackschicht zeigen. Insbesondere bei Verwendung von mindestens einem Silan oder/und mindestens einer entsprechenden Verbindung mit mindestens einer derartigen Gruppe ist darauf zu achten, dass die Kondensation bei pH-Werten unter 2 gegebenenfalls sehr schnell verläuft. Vorzugsweise kann der Anteil an Aminosilanen, Ureidosilanen oder/und Silanen mit mindestens einer Harnstoffgruppe oder/und an entsprechenden Silanolen, Siloxanen und Polysiloxanen an der Summe an allen Arten an Verbindungen ausgewählt aus Silanen, Silanolen, Siloxanen und Polysiloxanen erhöht sein, besonders bevorzugt über 20, über 30 oder über 40 Gew.-% liegen berechnet als die entsprechenden Silanole, ganz besonders bevorzugt über 50, über 60, über 70 oder über 80 Gew.-% liegen und gegebenenfalls sogar bis zu 90, bis zu 95 oder bis zu 100 Gew.-% betragen.

Die wässerige Zusammensetzung weist einen Gehalt an Silan/Silanol/Siloxan/Polysiloxan a) im Bereich von 0,02 bis 2 g/L auf, berechnet auf Basis der entsprechenden Silanole. Bevorzugt liegt dieser Gehalt im Bereich von 0,05 bis 2 g/L oder im Bereich von 0,08 bis 1 g/L. Diese Gehaltsbereiche beziehen sich insbesondere auf Badzusammensetzungen.

Wenn jedoch ein Konzentrat eingesetzt wird, um eine entsprechende Badzusammensetzung herzustellen, insbesondere durch Verdünnen mit Wasser und gegebenenfalls durch Zusatz von mindestens einer weiteren Substanz, empfiehlt es sich, beispielsweise ein Konzentrat A mit einem Gehalt an Silan/Silanol/Siloxan/Polysiloxan a) getrennt von einem Konzentrat B mit einem Gehalt an allen oder fast allen übrigen Bestandteilen zu halten und diese Komponenten erst im Bad zusammenzuführen. Hierbei kann gegebenenfalls auch jeweils mindestens ein Silan, Silanol, Siloxan oder/und Polysiloxan auch teilweise oder gänzlich im festen Zustand vorliegen, im festen Zustand zugegeben werden oder/und als Dispersion oder Lösung zugesetzt werden. Der Gehalt an Silan/Silanol/Siloxan/Polysiloxan a) im Konzentrat A liegt vorzugsweise im Bereich von 0,01 bis 1000 g/L, berechnet auf Basis der entsprechenden Silanole. Besonders bevorzugt liegt er im Bereich von 0,02 bis 200 g/L, ganz besonders bevorzugt im Bereich von 0,05 bis 120 g/L, insbesondere im Bereich von 0,1 bis 60 g/L. Die Konzentrationsbereiche des Konzentrats A bzw. des Bades können jedoch je nach Applikation unterschiedliche Gehaltsschwerpunkte aufweisen.

Besonders bevorzugt enthält die Zusammensetzung einen Gehalt an jeweils mindestens einem Silan, Silanol, Siloxan oder/und Polysiloxan a) mit jeweils mindestens einer Gruppe ausgewählt aus Acrylatgruppen, Alkylaminoalkylgruppen, Alkylaminogruppen, Aminogruppen, Aminoalkylgruppen, Bernsteinsäureanhydridgruppen, Carboxylgruppen, Epoxygruppen, Glycidoxygruppen, Hydroxygruppen, Ureidogruppen, Isocyanatogruppen, Methacrylatgruppen oder/und Ureidogruppen (Harnstoffgruppen).

Die Silane, Silanole, Siloxane oder/und Polysiloxane in der wässerigen Zusammensetzung oder zumindest ihre der wässerigen Zusammensetzung zugesetzten Verbindungen sind oder zumindest ein Teil von ihnen ist vorzugsweise wasserlöslich. Die Silane im Sinne dieser Anmeldung werden als wasserlöslich angesehen, wenn sie summarisch bei Raumtemperatur in der Silan/Silanol/Siloxan/Polysiloxan enthaltenden Zusammensetzung eine Löslichkeit in Wasser von mindestens 0,05 g/L, vorzugsweise von mindestens 0,1 g/L, besonders bevorzugt von mindestens 0,2 g/L oder von mindestens 0,3 g/L aufweisen. Das bedingt nicht, dass jedes einzelne dieser Silane diese Mindestlöslichkeit aufweisen muss, sondern dass diese Mindestwerte durchschnittlich erzielt werden.

Vorzugsweise ist in der wässerigen Zusammensetzung mindestens ein Silan/Silanol/Siloxan/Polysiloxan enthalten ausgewählt aus Fluor-freien Silanen und den entsprechenden Silanolen/Siloxanen/Polysiloxanen aus jeweils mindestens einem Acyloxysilan, einem Alkoxysilan, einem Silan mit mindestens einer Aminogruppe wie einem Aminoalkylsilan, einem Silan mit mindestens einer Bernsteinsäuregruppe oder/und Bernsteinsäureanhydridgruppe, einem Bis-Silyl-Silan, einem Silan mit mindestens einer Epoxygruppe wie einem Glycidoxysilan, einem (Meth)acrylato-Silan, einem Multi-Silyl-Silan, einem Ureidosilan, einem Vinylsilan oder/und mindestens einem Silanol oder/und mindestens einem Siloxan bzw. Polysiloxan von chemisch entsprechender Zusammensetzung wie die zuvor genannten Silane. Sie enthält mindestens ein Silan oder/und (jeweils) mindestens ein monomeres, dimeres, oligomeres oder/und polymeres Silanol oder/und (jeweils) mindestens ein monomeres, dimeres, oligomeres oder/und polymeres Siloxan, wobei im folgenden hierbei Oligomere auch schon Dimere und Trimere umfassen sollen. Besonders bevorzugt hat das mindestens eine Silan bzw. das entsprechende Silanol/Siloxan/Polysiloxan jeweils mindestens eine Amino-Gruppe, Harnstoff-Gruppe oder/und Ureido-Gruppe.

Insbesondere ist hierin mindestens ein Silan oder/und mindestens ein entsprechendes Silanol/Siloxan/Polysiloxan enthalten ausgewählt aus der Gruppe von oder auf Basis von
(3,4-Epoxyalkyl)trialkoxysilan,
(3,4-Epoxycycloalkyl)alkyltrialkoxysilan,
3-Acryloxyalkyltrialkoxysilan,
3-Glycidoxyalkyltrialkoxysilan,
3-Methacryloxyalkyltrialkoxysilan,
3-(Trialkoxysilyl)alkylbernsteinsäuresilan,
4-Amino-dialkylalkyltrialkoxysilan,
4-Amino-dialkylalkylalkyldialkoxysilan,
Aminoalkylaminoalkyltrialkoxysilan,
Aminoalkylaminoalkylalkyldialkoxysilan,
Aminoalkyltrialkoxysilan,
Bis-(trialkoxysilylalkyl)amin,
Bis-(trialkoxysilyl)ethan,
Gam ma-Acryloxyalkyltrialkoxysilan,
Gamma-Aminoalkyltrialkoxysilan,
Gamma-Methacryloxyalkyltrialkoxysilan,
(Gamma-Trialkoxysilylalkyl)dialkylentriamin,
Gamma-Ureidoalkyltrialkoxysilan,
N-2-Aminoalkyl-3-aminoproplyltrialkoxysilan,
N-(3-trialkoxysilylalkyl)alkylendiamin,
N-Alkylaminoisoalkyltrialkoxysilan,
N-(Aminoalkyl)aminoalkylalkyldialkoxysilan,
N-beta-(aminoalkyl)-gamma-aminoalkyltrialkoxysilan,
N-(gamma-trialkoxysilylalkyl)dialkylentriamin,
N-Phenyl-aminoalkyltrialkoxysilan,
Poly(aminoalkyl)alkyldialkoxysilan,
Tris(3-trialkoxysilyl)alkylisocyanurat,
Ureidoalkyltrialkoxysilan und
Vinylacetoxysilan.

Besonders bevorzugt ist hierin mindestens ein Silan oder/und mindestens ein entsprechendes Silanol/Siloxan/Polysiloxan enthalten ausgewählt aus der Gruppe von oder auf Basis von
(3,4-Epoxybutyl)triethoxysilan,
(3,4-Epoxybutyl)trimethoxysilan,
(3,4-Epoxycyclohexyl)propyltriethoxysilan,
(3,4-Epoxycyclohexyl)propyltrimethoxysilan,
3-Acryloxypropyltriethoxysilan,
3-Acryloxypropyltrimethoxysilan,
3-Aminopropylsilanetriol,
3-Glycidoxypropyltriethoxysilan,
3-Glycidoxypropyltrimethoxysilan,
3-Methacryloxypropyltriethoxysilan,
3-Methacryloxypropyltrimethoxysilan,
3-(Triethoxysilyl)propylbernsteinsäuresilan,
Aminoethylaminopropylmethyldiethoxysilan,
Aminoethylaminopropylmethyldimethoxysilan,
Aminopropyltrialkoxysilan,
Beta-(3,4-Epoxycyclohexyl)ethyltriethoxysilan,
Beta-(3,4-Epoxycyclohexyl)ethyltrimethoxysilan,
Beta-(3,4-Epoxycyclohexyl)methyltriethoxysilan,
Beta-(3,4-Epoxycyclohexyl)methyltrimethoxysilan,
Bis-1,2-(triethoxysilyl)ethan,
Bis-1,2-(trimethoxysilyl)ethan,
Bis(triethoxysilylpropyl)amin,
Bis(trimethoxysilylpropyl)amin,
Gamma-(3,4-Epoxycyclohexyl)propyltriethoxysilan,
Gamma- (3,4-Epoxycyclohexyl)propyltrimethoxysilan,
Gamma-Acryloxypropyltriethoxysilan,
Gamma-Acryloxypropyltrimethoxysilan,
Gamma-Aminopropyltriethoxysilan,
Gamma-Aminopropyltrimethoxysilan,
Gamma-Methacryloxypropyltriethoxysilan,
Gamma-Methacryloxypropyltrimethoxysilan,
Gamma-Ureidopropyltrialkoxysilan,
N-2-Aminoethyl-3-aminoproplyltriethoxysilan,
N-2-Aminoethyl-3-aminoproplyltrimethoxysilan,
N-2-Aminomethyl-3-aminoproplyltriethoxysilan,
N-2-Aminomethyl-3-aminoproplyltrimethoxysilan,
N-(3-(trimethoxysilyl)propyl)ethylendiamin,
N-beta-(aminoethyl)-gamma-aminopropyltriethoxysilan,
N-beta-(aminoethyl)-gamma-aminopropyltrimethoxysilan,
N-(gamma-triethoxysilylpropyl)diethylentriamin,
N-(gamma-trimethoxysilylpropyl)diethylentriamin,
N-(gamma-triethoxysilylpropyl)dimethylentriamin,
N-(gamma-trimethoxysilylpropyl)dimethylentriamin,
Poly(aminoalkyl)ethyldialkoxysilan,
Poly(aminoalkyl)methyldialkoxysilan,
Tris(3-(triethoxysilyl)propyl)isocyanurat,
Tris(3-(trimethoxysilyl)propyl)isocyanurat,
Ureidopropyltrialkoxysilan und
Vinyltriacetoxysilan.

Gegebenenfalls ist in einzelnen Ausführungsvarianten in der wässerigen Zusammensetzung mindestens ein Silan/Silanol/Siloxan/Polysiloxan enthalten mit einer Fluor-haltigen Gruppe. Je nach Auswahl der SilanVerbindung(en) kann auch die Hydrophilie/Hydrophobie zielstrebig eingestellt werden.

Vorzugsweise wird in manchen Ausführungsformen der wässerigen Zusammensetzung mindestens ein zumindest teilweise hydrolysiertes oder/und ein zumindest teilweise kondensiertes Silan/Silanol/Siloxan/Polysiloxan zugesetzt. Insbesondere beim Zusammenmischen der wässerigen Zusammensetzung kann gegebenenfalls jeweils mindestens ein bereits vorhydrolysiertes oder/und vorkondensiertes Silan/Silanol/Siloxan/Polysiloxan zugesetzt werden. Ein derartiger Zusatz ist besonders bevorzugt.

In manchen Ausführungsformen kann der wässerigen Zusammensetzung mindestens ein zumindest weitgehend oder/und vollständig hydrolysiertes oder/und ein zumindest weitgehend oder/und vollständig kondensiertes Silan/Silanol/Siloxan/Polysiloxan zugesetzt werden. Ein nicht hydrolysiertes Silan bindet in vielen Ausführungsvarianten schlechter an die metallische Oberfläche an als ein zumindest teilweise hydrolysiertes Silan/Silanol. Ein weitgehend hydrolysiertes und nicht oder nur wenig kondensiertes Silan/Silanol/Siloxan bindet in vielen Ausführungsvarianten deutlich besser an die metallische Oberfläche an als ein zumindest teilweise hydrolysiertes und weitgehend kondensiertes Silan/Silanol/Siloxan/Polysiloxan. Ein vollständig hydrolysiertes und weitgehend kondensiertes Silanol/Siloxan/Polysiloxan zeigt in vielen Ausführungsvarianten nur noch eine geringe Neigung an die metallische Oberfläche chemisch angebunden zu werden.

In manchen Ausführungsformen kann der wässerigen Zusammensetzung zusätzlich oder/und alternativ zu Silan(en)/Silanol(en) mindestens ein Siloxan oder/und Polysiloxan zugesetzt werden, das keinen oder nur einen geringen Gehalt - z.B. weniger als 20 oder weniger als 40 Gew.-% der Summe an Silan/Silanol/Siloxan/Polysiloxan - an Silanen/Silanolen aufweist. Das Siloxan bzw. Polysiloxan ist vorzugsweise kurzkettig und wird vorzugsweise durch Rollcoater-Behandlung aufgetragen. Dann wirkt sich das auf die Beschichtung gegebenenfalls durch stärkere Hydrophobie und höheren Blankkorrosionsschutz aus.

Vorzugsweise weist die wässerige Zusammensetzung mindestens zwei oder sogar mindestens drei Verbindungen von Titan, Hafnium, Zirkonium, Aluminium und Bor auf. Hierbei können sich diese Verbindungen in ihren Kationen oder/und in ihren Anionen unterscheiden. Die wässerige Zusammensetzung, insbesondere die Badzusammensetzung, weist einen Gehalt an mindestens einem Komplexfluorid b), besonders bevorzugt an mindestens zwei Komplexfluoriden ausgewählt aus Komplexfluoriden von Titan, Hafnium, Zirkonium, Aluminium und Bor auf. Vorzugsweise liegt ihr Unterschied nicht nur in der Art des Komplexes. Hierbei weist die wässerige Zusammensetzung, insbesondere die Badzusammensetzung, einen Gehalt an Verbindungen b) ausgewählt aus Verbindungen von Titan, Hafnium, Zirkonium, Aluminium und Bor auf im Bereich von 0,1 bis 5 g/L berechnet als Summe der entsprechenden Metalle. Bevorzugt liegt dieser Gehalt im Bereich von 0,3 bis 5 g/L oder von 0,5 bis 5 g/L. Dagegen kann der Gehalt an Verbindungen von Titan, Hafnium, Zirkonium, Aluminium und Bor im Konzentrat, beispielsweise im Silan/Silanol/Siloxan/Polysiloxan-freien Konzentrat B, vorzugsweise im Bereich von 1 bis 300 g/L liegen berechnet als Summe der entsprechenden Metalle. Besonders bevorzugt liegt er im Bereich von 2 bis 250 g/L, ganz besonders bevorzugt im Bereich von 3 bis 200 g/L, insbesondere im Bereich von 5 bis 150 g/L.

Hierbei enthält die Zusammensetzung mindestens ein Komplexfluorid, wobei der Gehalt an Komplexfluorid(en) insbesondere im Bereich von 0,01 bis 100 g/L liegt berechnet als Summe der entsprechenden Metallkomplexfluoride als MeF₆. Bevorzugt liegt der Gehalt im Bereich von 0,03 bis 70 g/L, besonders bevorzugt im Bereich von 0,06 bis 40 g/L, ganz besonders bevorzugt im Bereich von 1 bis 10 g/L. Das Komplexfluorid kann insbesondere als MeF₄ oder/und als MeF₆, jedoch auch in anderen Stufen bzw. Zwischenstufen vorliegen. Vorteilhafterweise liegt in vielen Ausführungsvarianten gleichzeitig mindestens ein Titan- und mindestens ein Zirkoniumkomplexfluorid vor. Hierbei kann es in vielen Fällen vorteilhaft sein, gleichzeitig mindestens einen MeF₄- und mindestens einen MeF₆-Komplex in der Zusammensetzung vorliegen zu haben, insbesondere gleichzeitig einen TiF₆- und einen ZrF₄-Komplex. Hierbei kann es vorteilhaft sein, diese Komplexfluorid-Verhältnisse bereits im Konzentrat einzustellen und auf diesem Wege in das Bad zu übernehmen. Dagegen kann der Gehalt an diesen Verbindungen im Konzentrat, beispielsweise im Silan/Silanol/Siloxan/Polysiloxan-freien Konzentrat B, vorzugsweise im Bereich von 0,05 bis 500 g/L liegen berechnet als Summe MeF₆. Besonders bevorzugt liegt er im Bereich von 0,05 bis 300 g/L, ganz besonders bevorzugt im Bereich von 0,05 bis 150 g/L, insbesondere im Bereich von 0,05 bis 50 g/L.

Erstaunlicherweise beeinflussen sich die einzelnen Komplexfluoride bei ihrer Kombination nicht negativ, sondern zeigen einen unerwarteten positiven Verstärkungseffekt. Diese Zusätze auf Basis von Komplexfluorid wirken offenbar in ähnlicher oder gleicher Weise. Wenn eine Kombination von Komplexfluoriden auf Basis von Titan und Zirkonium und nicht nur ein Komplexfluorid nur auf Basis von Titan oder nur eines auf Basis von Zirkonium eingesetzt wurde, ergaben sich überraschenderweise immer merklich bessere Ergebnisse als bei einem einzelnen dieser Zusätze. Auf der Oberfläche scheidet sich ein Komplexfluorid auf Basis von Titan bzw. von Zirkonium vermutlich als Oxid oder/und Hydroxid ab.

Es wurde jetzt überraschend festgestellt, dass eine gute Multimetall-Behandlung mit einer einzigen wässerigen Zusammensetzung erst möglich ist, wenn ein Komplexfluorid eingesetzt wurde, und dass eine sehr gute Multimetall-Behandlung mit einer einzigen wässerigen Zusammensetzung erst möglich ist, wenn mindestens zwei verschiedene Komplexfluoride verwendet werden wie z.B. solche auf Basis von Titan und von Zirkonium. Die einzeln eingesetzten Komplexfluoride zeigten bei den verschiedensten Versuchen nie Ergebnisse, die gleich gut waren wie für die Kombination dieser beiden Komplexfluoride, unabhängig davon, welche Zusätze darüber hinaus dazugegeben wurden.

Alternativ zu mindestens einem Komplexfluorid oder zusätzlich hierzu kann auch eine andersartige Verbindung von Titan, Hafnium, Zirkonium, Aluminium oder/und Bor zugesetzt werden, beispielsweise mindestens ein Hydroxycarbonat oder/und mindestens eine andere wasserlösliche oder schwach wasserlösliche Verbindung wie z.B. mindestens ein Nitrat oder/und mindestens ein Carboxylat.

Allerdings hat sich jetzt herausgestellt, dass sich ein Zusatz an Siliciumhexafluorid als einzigem einer wässerigen Zusammensetzung zugesetzten Komplexfluorid anders als die Zusätze an anderen Komplexfluoriden teilweise deutlich schlechter auswirkt.

Vorzugsweise werden als Kationen oder/und entsprechende Verbindungen c) nur Arten von Kationen bzw. entsprechende Verbindungen ausgewählt aus der Gruppe von Magnesium, Kalzium, Yttrium, Lanthan, Cer, Vanadium, Niob, Tantal, Molybdän, Wolfram, Mangan, Eisen, Kobalt, Nickel, Kupfer, Silber und Zink, besonders bevorzugt aus der Gruppe von Magnesium, Kalzium, Yttrium, Lanthan, Cer, Vanadium, Molybdän, Wolfram, Mangan, Eisen, Kobalt, Kupfer und Zink, wenn von Spurengehalten abgesehen wird. Andererseits hat sich überraschenderweise gezeigt, dass Kationen von Eisen und Zink und daher auch die Anwesenheit entsprechender Verbindungen im Bad, die gerade bei sauren Zusammensetzungen zum Herauslösen von derartigen Ionen aus der metallischen Oberfläche vermehrt beitragen können, sich in weiten Gehaltsbereichen nicht negativ auf das Badverhalten, die Schichtausbildung und die Schichteigenschaften auswirken.

Die wässerige Zusammensetzung, insbesondere die Badzusammensetzung, weist einen Gehalt an Kationen oder/und entsprechenden Verbindungen c) im Bereich von 0,1 bis 6 g/L auf berechnet als Summe der Metalle. Dagegen kann der Gehalt an diesen Verbindungen im Konzentrat, beispielsweise im Silan/Silanol/Siloxan/Polysiloxan-freien Konzentrat B, vorzugsweise im Bereich von 1 bis 240 g/L liegen berechnet als Summe der Metalle. Besonders bevorzugt liegt er im Bereich von 2 bis 180 g/L, ganz besonders bevorzugt im Bereich von 3 bis 140 g/L, insbesondere im Bereich von 5 bis 100 g/L. Der Mangangehalt beträgt mindestens 0,08 g/l. Vorzugsweise ist der Mangangehalt höher als der Zinkgehalt, falls sowohl Mangan, als auch Zink zugegeben wird.

Vorzugsweise enthält die Zusammensetzung mindestens eine Art Kationen ausgewählt aus Kationen von Cer, Chrom, Eisen, Kalzium, Kobalt, Kupfer, Magnesium, Molybdän, Nickel, Niob, Tantal, Yttrium, Zink, Zinn und weiteren Lanthaniden oder/und mindestens eine entsprechende Verbindung. Vorzugsweise sind nicht alle Kationen, die in der wässerigen Zusammensetzung enthalten sind, nicht nur durch die wässerige Zusammensetzung aus der metallischen Oberfläche herausgelöst, sondern auch zumindest teilweise oder sogar weitgehend der wässerigen Zusammensetzung zugesetzt worden. Daher kann ein frisch angesetztes Bad von bestimmten Kationen bzw. Verbindungen frei sein, die erst aus Reaktionen mit metallischen Werkstoffen bzw. aus Reaktionen im Bad freigesetzt werden bzw. entstehen.

Der Zusatz von Manganionen bzw. an mindestens einer Manganverbindung hat sich überraschend als besonders vorteilhaft herausgestellt. Obwohl offenbar keine oder fast keine Manganverbindung auf der metallischen Oberfläche abgeschieden wird, fördert dieser Zusatz offenbar die Abscheidung von Silan/Silanol/Siloxan/Polysiloxan und verbessert so die Eigenschaften der Beschichtung signifikant. Auch ein Zusatz an Magnesiumionen bzw. an mindestens einer Magnesiumverbindung hat sich unerwartet als vorteilhaft herausgestellt, da dieser Zusatz die Abscheidung von Titan- oder/und Zirkoniumverbindungen, vermutlich als Oxid oder/und Hydroxid, auf der metallischen Oberfläche fördert und somit die Eigenschaften der Beschichtung deutlich verbessert. Ein kombinierter Zusatz von Magnesium und Mangan führt teilweise zu noch weiter verbesserten Beschichtungen. Dagegen hat sich ein Zusatz von nur 0,02 g/L an Kupferionen noch nicht als von signifikantem Einfluss herausgestellt. Bei einem höheren Gehalt an Kalziumionen ist darauf zu achten, dass keine Destabilisierung eines Komplexfluorids durch Bildung von Calciumfluorid auftritt.

Vorzugsweise enthält die Zusammensetzung einen Gehalt an mindestens einer Art Kationen oder/und entsprechende Verbindungen ausgewählt aus Erdalkalimetallionen im Bereich von 0,01 bis 50 g/L berechnet als entsprechende Verbindungen, besonders bevorzugt im Bereich von 0,03 bis 35 g/L, ganz besonders bevorzugt im Bereich von 0,06 bis 20 g/L, insbesondere im Bereich von 0,1 bis 8 g/L. Die Erdalkalimetallionen bzw. entsprechende Verbindungen können helfen, die Abscheidung von Verbindungen auf Basis von Titan oder/und Zirkonium zu verstärken, was oft insbesondere für die Erhöhung der Korrosionsbeständigkeit von Vorteil ist. Dagegen kann der Gehalt an diesen Verbindungen im Konzentrat, beispielsweise im Silan/Silanol/Siloxan/Polysiloxan-freien Konzentrat B, vorzugsweise im Bereich von 0,1 bis 100 g/L liegen berechnet als Summe der entsprechenden Verbindungen, besonders bevorzugt im Bereich von 0,3 bis 80 g/L, ganz besonders bevorzugt im Bereich von 0,6 bis 60 g/L, insbesondere im Bereich von 0,5 bis 30 g/L.

Vorzugsweise enthält die Zusammensetzung einen Gehalt an mindestens einer Art Kationen ausgewählt aus Kationen von Eisen, Kobalt, Magnesium, Nickel, Yttrium, Zink und Lanthaniden oder/und aus mindestens einer entsprechenden Verbindung c), insbesondere im Bereich von 0,01 bis 20 g/L berechnet als Summe der Metalle. Besonders bevorzugt liegt er im Bereich von 0,03 bis 15 g/L, ganz besonders bevorzugt im Bereich von 0,06 bis 10 g/L, insbesondere im Bereich von 0,1 bis 6 g/L. Dagegen kann der Gehalt an diesen Verbindungen im Konzentrat, beispielsweise im Silan/Silanol/Siloxan/Polysiloxan-freien Konzentrat B, vorzugsweise im Bereich von 1 bis 240 g/L liegen berechnet als Summe der Metalle. Besonders bevorzugt liegt er im Bereich von 2 bis 180 g/L, ganz besonders bevorzugt im Bereich von 3 bis 140 g/L, insbesondere im Bereich von 5 bis 100 g/L.

Die Zusammensetzung enthält einen Gehalt an allen Arten der Substanzen d) im Bereich von 0,01 bis 25 g/L berechnet als Summe der entsprechenden Verbindungen, bevorzugt im Bereich von 0,1 bis 25 g/L. Dagegen kann der Gehalt an diesen Verbindungen im Konzentrat, beispielsweise im Silan/Silanol/Siloxan/Polysiloxan-freien Konzentrat B, vorzugsweise im Bereich von 0,1 bis 500 g/L liegen berechnet als Summe der entsprechenden Verbindungen. Besonders bevorzugt ist ein Gehalt im Bereich von 0,3 bis 420 g/L, ganz besonders bevorzugt im Bereich von 0,6 bis 360 g/L, insbesondere im Bereich von 1 bis 300 g/L.

Vorzugsweise enthält die Zusammensetzung einen Gehalt an der Substanz d₁) Aminoguanidin im Bereich von 0,01 bis 25 g/L berechnet als Summe der entsprechenden Verbindungen. Besonders bevorzugt liegt der Gehalt im Bereich von 0,03 bis 22 g/L, ganz besonders bevorzugt im Bereich von 0,06 bis 15 g/L, insbesondere im Bereich von 0,1 bis 10 g/L. Dagegen kann der Gehalt an dieser Verbindung im Konzentrat, beispielsweise im Silan/Silanol/Siloxan/Polysiloxan-freien Konzentrat B, vorzugsweise im Bereich von 0,1 bis 150 g/L liegen berechnet als Summe der entsprechenden Verbindungen. Besonders bevorzugt liegt er im Bereich von 0,3 bis 120 g/L, ganz besonders bevorzugt im Bereich von 0,6 bis 80 g/L, insbesondere im Bereich von 1 bis 50 g/L. Ein Zusatz an Aminoguanidin verbessert die Eigenschaften der erfindungsgemäßen Beschichtungen deutlich.

Vorzugsweise enthält die Zusammensetzung einen Gehalt an allen Arten der Substanzen d₂) - Anionen von Nitrit und Verbindungen mit einer Nitro-Gruppe - im Bereich von 0,01 bis 10 g/L berechnet als Summe der entsprechenden Verbindungen. Besonders bevorzugt liegt der Gehalt im Bereich von 0,02 bis 7,5 g/L, ganz besonders bevorzugt im Bereich von 0,03 bis 5 g/L, insbesondere im Bereich von 0,05 bis 1 g/L. Dagegen kann der Gehalt an diesen Verbindungen im Konzentrat, beispielsweise im Silan/Silanol/Siloxan/Polysiloxan-freien Konzentrat B, vorzugsweise im Bereich von 0,05 bis 30 g/L aufweist berechnet als Summe der entsprechenden Verbindungen. Besonders bevorzugt liegt er im Bereich von 0,06 bis 20 g/L, ganz besonders bevorzugt im Bereich von 0,08 bis 10 g/L, insbesondere im Bereich von 0,1 bis 3 g/L. Vorzugsweise wird die Substanz d₂) zugesetzt als salpetrige Säure HNO₂, als ein Alkalinitrit, als Ammoniumnitrit, als Nitroguanidin oder/und als Paranitrotoluolsulfonsäure, insbesondere als Natriumnitrit oder/und Nitroguanidin.

Es wurde jetzt überraschend festgestellt, dass ein Zusatz insbesondere an Nitroguanidin zu der wässerigen Zusammensetzung das Aussehen der erfindungsgemäßen Beschichtungen sehr gleichmäßig gestaltet und die Beschichtungsqualität spürbar steigert. Dies wirkt sich insbesondere an "sensiblen" metallischen Oberflächen wie auf sandgestrahlten Eisen- bzw. Stahloberflächen sehr positiv aus. Ein Zusatz an Nitroguanidin verbessert die Eigenschaften der erfindungsgemäßen Beschichtungen merklich.

Es wurde jetzt überraschend festgestellt, dass ein Zusatz an Nitrit die Anrostneigung vor allem von Eisen- und Stahloberflächen deutlich verringern kann.

Vorzugsweise enthält die Zusammensetzung einen Gehalt an allen Arten der Substanzen d₃) - Verbindungen auf Basis von Peroxid wie z.B. Wasserstoffperoxid oder/und mindestens ein organisches Peroxid - im Bereich von 0,005 bis 5 g/L berechnet als H₂O₂. Besonders bevorzugt liegt der Gehalt im Bereich von 0,006 bis 3 g/L, ganz besonders bevorzugt im Bereich von 0,008 bis 2 g/L, insbesondere im Bereich von 0,01 bis 1 g/L. Dagegen kann der Gehalt an diesen Verbindungen im Konzentrat, beispielsweise im Silan/Silanol/Siloxan/Polysiloxan-freien Konzentrat B, vorzugsweise im Bereich von 0,01 bis 30 g/L liegen berechnet als Summe der entsprechenden Verbindungen. Besonders bevorzugt liegt er im Bereich von 0,03 bis 20 g/L, ganz besonders bevorzugt im Bereich von 0,05 bis 15 g/L, insbesondere im Bereich von 0,1 bis 10 g/L. Bei Anwesenheit von Titan ergibt sich im Bad oft ein Titan-Peroxo-Komplex, der die Lösung bzw. Dispersion orange einfärbt. Diese Färbung ist jedoch typischerweise nicht in der Beschichtung, da dieser Komplex offensichtlich nicht als solcher in die Beschichtung eingebaut wird. Daher kann über die Farbe des Bades der Titangehalt bzw. Peroxidgehalt abgeschätzt werden. Vorzugsweise wird die Substanz d₃) zugesetzt als Wasserstoffperoxid.

Es wurde jetzt unerwartet festgestellt, dass ein Zusatz an Wasserstoffperoxid zu der erfindungsgemäßen wässerigen Zusammensetzung die optische Qualität der beschichteten Substrate verbessert.

Vorzugsweise enthält die Zusammensetzung einen Gehalt an allen Arten der Substanzen d₄) - Phosphor-haltigen Verbindungen - im Bereich von 0,01 bis 20 g/L berechnet als Summe der Phosphor enthaltenden Verbindungen. Vorzugsweise enthalten diese Verbindungen Phosphor und Sauerstoff, insbesonders als Oxyanionen und als entsprechende Verbindungen. Besonders bevorzugt liegt der Gehalt im Bereich von 0,05 bis 18 g/L, ganz besonders bevorzugt im Bereich von 0,1 bis 15 g/L, insbesondere im Bereich von 0,2 bis 12 g/L. Dagegen kann der Gehalt an diesen Verbindungen im Konzentrat, beispielsweise im Silan/Silanol/Siloxan/Polysiloxan-freien Konzentrat B, vorzugsweise im Bereich von 0,1 bis 100 g/L liegen berechnet als Summe der entsprechenden Verbindungen. Besonders bevorzugt liegt er im Bereich von 0,3 bis 80 g/L, ganz besonders bevorzugt im Bereich von 0,6 bis 60 g/L, insbesondere im Bereich von 1 bis 50 g/L. Vorzugsweise wird jeweils als Substanz d₄) mindestens jeweils ein Orthophosphat, ein oligomeres oder/und polymeres Phosphat oder/und ein Phosphonat zugesetzt. Das mindestens eine Orthophosphat oder/und deren Salze oder/und deren Ester kann/können beispielsweise jeweils mindestens ein Alkaliphosphat, Eisen-, Mangan- oder/und Zink-haltiges Orthophosphat oder/und mindestens eines ihrer Salze oder/und Ester sein. Stattdessen oder zusätzlich kann auch jeweils mindestens ein Metaphosphat, Polyphosphat, Pyrophosphat, Triphosphat oder/und deren Salze oder/und deren Ester zugesetzt werden. Als Phosphonat kann beispielsweise jeweils mindestens eine Phosphonsäure wie z.B. mindestens eine Alkyldiphosphonsäure oder/und deren Salze oder/und deren Ester zugesetzt werden. Die Phosphor-haltigen Verbindungen d₄) sind keine Tenside.

Es wurde jetzt überraschend festgestellt, dass ein Zusatz an Orthophosphat zu der erfindungsgemäßen wässerigen Zusammensetzung die Qualität der Beschichtungen insbesondere auf elektrolytisch verzinkten Substraten deutlich verbessert.

Es wurde außerdem jetzt überraschend festgestellt, dass ein Zusatz an Phosphonat zu der erfindungsgemäßen wässerigen Zusammensetzung die Korrosionsbeständigkeit von Aluminium-reichen Oberflächen merklich verbessert, insbesondere bei Werten im CASS-Test.

Vorzugsweise enthält die wässerige Zusammensetzung einen Gehalt an mindestens einer Art Anionen ausgewählt aus Carboxylaten wie z.B. Acetat, Butyrat, Citrat, Formiat, Fumarat, Glykolat, Hydroxyacetat, Lactat, Laurat, Maleat, Malonat, Oxalat, Propionat, Stearat, Tartrat oder/und an mindestens einer entsprechenden, nicht oder/und nur teilweise dissoziierten Verbindung.

Vorzugsweise enthält die Zusammensetzung einen Gehalt an Carboxylat-Anionen oder/und Carboxylat-Verbindungen im Bereich von 0,01 bis 30 g/L berechnet als Summe der entsprechenden Verbindungen. Besonders bevorzugt liegt der Gehalt im Bereich von 0,05 bis 15 g/L, ganz besonders bevorzugt im Bereich von 0,1 bis 8 g/L, insbesondere im Bereich von 0,3 bis 3 g/L. Als Carboxylat kann besonders bevorzugt jeweils mindestens ein Citrat, Lactat, Oxalat oder/und Tartrat zugesetzt werden. Dagegen kann der Gehalt an diesen Verbindungen im Konzentrat, beispielsweise im Silan/Silanol/Siloxan/Polysiloxan-freien Konzentrat B, vorzugsweise im Bereich von 0,05 bis 100 g/L liegen berechnet als Summe der entsprechenden Verbindungen. Besonders bevorzugt liegt er im Bereich von 0,06 bis 80 g/L, ganz besonders bevorzugt im Bereich von 0,08 bis 60 g/L, insbesondere im Bereich von 1 bis 30 g/L. Der Zusatz an mindestens einem Carboxylat kann helfen, ein Kation zu komplexieren und leichter in Lösung zu halten, wodurch eine höhere Badstabilität und Steuerbarkeit des Bades erreicht werden kann. Überraschenderweise wurde gefunden, dass durch einen Carboxylatgehalt die Bindung eines Silans an die metallische Oberfläche teilweise erleichtert und verbessert werden kann.

Die Zusammensetzung enthält auch einen Gehalt an Nitrat. Die Zusammensetzung enthält einen Gehalt an Nitrat im Bereich von 0,1 bis 5 g/L berechnet als Summe der entsprechenden Verbindungen. Nitrat kann helfen, die Ausbildung der Beschichtung insbesondere auf Stahl zu vergleichmäßigen. Nitrit kann sich gegebenenfalls, meist nur teilweise, in Nitrat umwandeln. Nitrat kann insbesondere zugegeben werden als Alkalimetallnitrat, Ammoniumnitrat, Schwermetallnitrat, als Salpetersäure oder/und eine entsprechende organische Verbindung. Das Nitrat kann die Neigung zum Anrosten insbesondere bei Oberflächen von Stahl und Eisen deutlich vermindern. Das Nitrat kann gegebenenfalls beitragen zur Ausbildung einer fehlerfreien Beschichtung oder/und einer außergewöhnlich ebenen Beschichtung, die gegebenenfalls frei von optisch erkennbaren Markierungen ist. Dagegen kann der Gehalt an Nitrat und an entsprechenden Verbindungen im Konzentrat, beispielsweise im Silan/Silanol/Siloxan/Polysiloxan-freien Konzentrat B, vorzugsweise im Bereich von 0,1 bis 500 g/L liegen berechnet als Summe der entsprechenden Verbindungen. Besonders bevorzugt liegt der Gehalt im Bereich von 0,3 bis 420 g/L, ganz besonders bevorzugt im Bereich von 0,6 bis 360 g/L, insbesondere im Bereich von 1 bis 300 g/L.

Vorzugsweise enthält die Zusammensetzung einen Gehalt an mindestens einer organischen Verbindung ausgewählt aus Monomeren, Oligomeren, Polymeren, Copolymeren und Blockcopolymeren, insbesondere mindestens eine Verbindung auf Basis von Acryl, Epoxid oder/und Urethan. Hierbei kann zusätzlich oder alternativ auch mindestens eine organische Verbindung mit mindestens einer Silyl-Gruppe eingesetzt werden. In manchen Ausführungsformen ist es bevorzugt, solche organischen Verbindungen mit einem Gehalt oder mit einem höheren Gehalt an OH-Gruppen, an AminGruppen, an Carboxylat-Gruppen, an Isocyanat-Gruppen oder/und an Isocyanurat-Gruppen einzusetzen.

Vorzugsweise enthält die Zusammensetzung einen Gehalt an mindestens einer organischen Verbindung ausgewählt aus Monomeren, Oligomeren, Polymeren, Copolymeren und Blockcopolymeren im Bereich von 0,01 bis 200 g/L berechnet als Feststoffzusatz. Besonders bevorzugt liegt der Gehalt im Bereich von 0,03 bis 120 g/L, ganz besonders bevorzugt im Bereich von 0,06 bis 60 g/L, insbesondere im Bereich von 0,1 bis 20 g/L. Solche organischen Verbindungen können in manchen Ausführungsvarianten helfen, die Ausbildung der Beschichtung zu vergleichmäßigen. Diese Verbindungen können bei der Ausbildung einer kompakteren, dichteren, chemisch resistenteren oder/und wasserresistenteren Beschichtung im Vergleich zu Beschichtungen auf Basis Silan/Silanol/Siloxan/Polysiloxan usw. ohne diese Verbindungen beitragen. Je nach Auswahl der organischen Verbindung(en) kann auch die Hydrophilie/Hydrophobie zielstrebig eingestellt werden. Eine stark hydrophobe Beschichtung ist jedoch in einigen Anwendungen problematisch wegen der erforderlichen Anbindung von insbesondere wasserbasierten Lacken. Insbesondere bei Pulverlacken kann jedoch eine stärkere Hydrophobie eingestellt werden. Bei Verwendung eines Zusatzes von mindestens einer organischen Verbindung kann sich eine Kombination mit Verbindungen mit einer gewissen Funktionalität besonders vorteilhaft erweisen wie z.B. Verbindungen auf Basis von Aminen/Diaminen/Polyaminen/Harnstoff/lminen/Diiminen/Polyiminen bzw. deren Derivaten, Verbindungen auf Basis von insbesondere verkappten Isocyanaten/Isocyanuraten/Melamin-Verbindungen, Verbindungen mit Carboxyl- oder/und Hydroxyl-Gruppen wie z.B. Carboxylate, längerkettige Zucker-artige Verbindungen wie z.B. (synthetische) Stärke, Cellulose, Saccharide, langkettige Alkohole oder/und deren Derivate. Unter den langkettigen Alkoholen werden insbesondere solche mit 4 bis 20 C-Atomen zugesetzt wie ein Butandiol, ein Butylglykol, ein Butyldiglykol, ein Ethylenglykolether wie Ethylenglykolmonobutylether, Ethylenglykolmonoethylether, Ethylenglykolmonomethylether, Ethylglykolpropylether, Ethylenglykolhexylether, Diethylenglykolmethylether, Diethylenglykolethylether, Diethylenglykolbutylether, Diethylenglykolhexylether oder ein Propylenglykolether wie Propylenglykolmonomethylether, Dipropylenglykolmonomethylether, Tripropylenglykolmonomethylether, Propylenglykolmonobutylether, Dipropylenglykolmonobutylether, Tripropylenglykolmonobutylether, Propylenglykolmonopropylether, Dipropylenglykolmonopropylether, Tripropylenglykolmonopropylether, Propylenglykolphenylether, Trimethylpentandioldiisobutyrat, ein Polytetrahydrofuran, ein Polyetherpolyol oder/und ein Polyesterpolyol.

Dagegen kann der Gehalt an diesen Verbindungen im Konzentrat, beispielsweise im Silan/Silanol/Siloxan/Polysiloxan-freien Konzentrat B oder/und im Silan-haltigen Konzentrat A 0,1 bis 500 g/L betragen berechnet als Summe der entsprechenden Verbindungen und als Feststoffzusatz. Besonders bevorzugt liegt er im Bereich von 0,3 bis 420 g/L, ganz besonders bevorzugt im Bereich von 0,6 bis 360 g/L, insbesondere im Bereich von 1 bis 100 g/L. Das gewichtsbezogene Verhältnis von Verbindungen auf Basis von Silan/Silanol/Siloxan/Polysiloxan berechnet auf Basis der entsprechenden Silanole zu Verbindungen auf Basis von organischen Polymeren berechnet als Feststoffzusatz in der Zusammensetzung liegt vorzugsweise im Bereich von 1 : 0,05 bis 1 : 3 , besonders bevorzugt im Bereich von 1 : 0,1 bis 1 : 2, ganz besonders bevorzugt im Bereich von 1 : 0,2 bis 1: 1. Dieses Verhältnis liegt in manchen Ausführungsvarianten vorzugsweise im Bereich von 1 : 0,05 bis 1 : 30 , besonders bevorzugt im Bereich von 1 : 0,1 bis 1 : 2, ganz besonders bevorzugt im Bereich von 1 : 0,2 bis 1 : 20, insbesondere im Bereich von 1 : 0,25 bis 1 : 12, im Bereich von 1 : 0,3 bis 1 : 8 oder im Bereich von 1 : 0,35 bis 1 : 5.

Vorzugsweise enthält die Zusammensetzung einen Gehalt an mindestens einer Art Kationen ausgewählt aus Alkalimetallionen, Ammoniumionen und entsprechenden Verbindungen, insbesondere an Kalium- oder/und Natriumionen bzw. an mindestens einer entsprechenden Verbindung.

Vorzugsweise enthält die Zusammensetzung einen Gehalt an freiem Fluorid im Bereich von 0,001 bis 3 g/L, berechnet als F⁻. Bevorzugt liegt der Gehalt im Bereich von 0,01 bis 1 g/L, besonders bevorzugt im Bereich von 0,02 bis 0,5 g/L, ganz besonders bevorzugt im Bereich bis 0,1 g/L. Es wurde ermittelt, dass es in vielen Ausführungsvarianten vorteilhaft ist, einen geringen Gehalt an freiem Fluorid im Bad zu haben, weil das Bad dann in vielen Ausführungsformen stabilisiert werden kann. Ein zu hoher Gehalt an freiem Fluorid kann manchmal die Abscheidungsrate an Kationen negativ beeinflussen. Daneben kann in vielen Fällen auch nicht-dissoziiertes oder/und nicht komplex-gebundenes Fluorid insbesondere im Bereich von 0,001 bis 0,3 g/L auftreten. Dagegen kann der Gehalt an diesen Verbindungen im Konzentrat, beispielsweise im Silan/Silanol/Siloxan/Polysiloxan-freien Konzentrat B, vorzugsweise im Bereich von 0,05 bis 5 g/L aufweist berechnet als Summe MeF₆. Besonders bevorzugt liegt er im Bereich von 0,02 bis 3 g/L, ganz besonders bevorzugt im Bereich von 0,01 bis 2 g/L, insbesondere im Bereich von 0,005 bis 1 g/L. Ein solcher Zusatz wird vorzugsweise in Form von Flußsäure oder/und deren Salzen zugesetzt.

Vorzugsweise enthält die Zusammensetzung einen Gehalt an mindestens einer Fluorid-haltigen Verbindung oder/und Fluorid-Anionen, berechnet als F⁻ und ohne Einbeziehung von Komplexfluoriden, insbesondere mindestens ein Fluorid von Alkalifluorid(en), Ammoniumfluorid oder/und Flußsäure, besonders bevorzugt im Bereich von 0,001 bis 12 g/L, ganz besonders bevorzugt im Bereich von 0,005 bis 8 g/L, insbesondere im Bereich von 0,01 bis 3 g/L. Die Fluoridionen bzw. entsprechende Verbindungen können helfen, die Abscheidung der Metallionen auf der metallische Oberfläche zu kontrollieren bzw. zu steuern, so dass z.B. die Abscheidung der mindestens einen Zirkonium-Verbindung bei Bedarf verstärkt oder verringert werden kann. Dagegen kann der Gehalt an diesen Verbindungen im Konzentrat, beispielsweise im Silan/Silanol/Siloxan/Polysiloxan-freien Konzentrat B, vorzugsweise im Bereich von 0,1 bis 100 g/L liegen berechnet als Summe der entsprechenden Verbindungen. Besonders bevorzugt liegt er im Bereich von 0,3 bis 80 g/L, ganz besonders bevorzugt im Bereich von 0,6 bis 60 g/L, insbesondere im Bereich von 1 bis 30 g/L. Vorzugsweise ist das Gewichtsverhältnis der Summe der Komplexfluoride berechnet als Summe der zugehörigen Metalle zur Summe der freien Fluoride berechnet als F⁻ größer 1 : 1, besonders bevorzugt größer als 3 : 1, ganz besonders bevorzugt größer als 5 : 1, besonders bevorzugt größer als 10 : 1.

Bei dem erfindungsgemäßen Verfahren kann die wässerige Zusammensetzung einen Gehalt an mindestens einer Verbindung ausgewählt aus Alkoxiden, Carbonaten, Chelaten, Tensiden und Additiven wie z.B. Bioziden oder/und Entschäumern aufweisen.

Als Katalysator für die Hydrolyse eines Silans kann z.B. Essigsäure zugesetzt werden. Die Abstumpfung des pH-Wertes des Bades kann beispielsweise mit Ammoniak/Ammoniumhydroxid, einem Alkalihydroxid oder/und einer Verbindung auf Basis von Amin wie z.B. Monoethanolamin erfolgen, während der pH-Wert des Bades vorzugsweise mit Essigsäure, Hydroxyessigsäure oder/und Salpetersäure abgesenkt wird. Derartige Gehalte gehören zu den den pH-Wert beeinflussenden Substanzen.

Die zuvor genannten Zusätze wirken in den erfindungsgemäßen wässerigen Zusammensetzungen in der Regel förderlich, indem sie die guten Eigenschaften der erfindungsgemäßen wässerigen Grundzusammensetzung aus den Komponenten a) bis d) und Lösemittel(n) noch weiter verbessert helfen. Diese Zusätze wirken in der Regel in gleicher Weise, wenn nur eine Titan- oder nur eine Zirkonium-Verbindung oder eine Kombination dieser eingesetzt wird. Es hat sich jedoch überraschend gezeigt, dass die Kombination von jeweils mindestens einer Titan- und von mindestens einer Zirkoniumverbindung, insbesondere als Komplexfluoride, die Eigenschaften vor allem der damit erzeugten Beschichtungen signifikant verbessern. Die verschiedenen Zusätze wirken damit erstaunlicherweise wie in einem Baukastensystem und tragen zur Optimierung der jeweiligen Beschichtung wesentlich bei. Gerade bei Verwendung eines sogenannten Multimetall-Mixes, wie er oft bei der Vorbehandlung von Karosserien und bei der Behandlung oder Vorbehandlung von verschiedenen Kleinteilen oder Montageteilen auftritt, hat sich die erfindungsgemäße wässerige Zusammensetzung sehr bewährt, da die Zusammensetzung mit den verschiedenen Zusätzen auf den jeweiligen Multimetall-Mix und seine Besonderheiten und Anforderungen spezifisch optimiert werden kann.

Bei dem erfindungsgemäßen Verfahren kann mit der wässerigen Beschichtung im gleichen Bad ein Mix aus verschiedenen metallischen Werkstoffen beschichtet werden wie z.B. bei Karosserien oder bei unterschiedlichen Kleinteilen. Hierbei können beispielsweise Substrate mit metallischen Oberflächen ausgewählt aus Gusseisen, Stahl, Aluminium, Aluminiumlegierungen, Magnesiumlegierungen, Zink und Zinklegierungen in einem beliebigen Mix gleichzeitig oder/und nacheinander erfindungsgemäß beschichtet werden, wobei die Substrate zumindest teilweise metallisch beschichtet sein können oder/und zumindest teilweise aus mindestens einem metallischen Werkstoff bestehen können.

Soweit nicht mindestens eine weitere Komponente oder/und Spuren an weiteren Substanzen enthalten sind, besteht der Rest auf 1000 g/L aus Wasser oder aus Wasser und mindestens einem organischen Lösemittel wie z.B. Äthanol, Methanol, Isopropanol bzw. Dimethylformamid (DMF). Vorzugsweise ist der Gehalt an organischen Lösemitteln in den meisten Ausführungsformen besonders niedrig oder Null. Aufgrund der Hydrolyse des mindestens einen enthaltenen Silans kann ein Gehalt insbesondere an mindestens einem Alkohol wie z.B. Äthanol oder/und Methanol auftreten. Besonders bevorzugt ist, kein organisches Lösemittel zuzusetzen.

Vorzugsweise ist die Zusammensetzung frei von oder im wesentlichen frei von allen Arten von Partikeln oder von Partikeln größer 0,02 µm mittlerem Durchmesser, die gegebenenfalls z.B. auf Basis von Oxiden wie z.B. SiO₂ zugesetzt werden könnten, besonders bevorzugt frei von kolloidalem SiO₂. insbesondere frei von kolloidalem SiO₂ bei Gehalten in der Zusammensetzung im Bereich von 0,45 bis 2,1 g/L.

Vorzugsweise ist die Zusammensetzung arm an, im wesentlichen frei oder frei von höheren Gehalten oder Gehalten an Wasserhärtebildnern wie z.B. Kalziumgehalte über 1 g/L. Vorzugsweise ist die wässerige Zusammensetzung frei oder arm an Blei, Cadmium, Chromat, Kobalt, Nickel oder/und anderen giftigen Schwermetallen. Vorzugsweise werden solche Substanzen nicht absichtlich zugesetzt, wobei jedoch mindestens ein Schwermetall aus einer metallischen Oberfläche herausgelöst, zum Beispiel aus einem anderen Bad eingeschleppt werden kann oder/und als Verunreinigung auftreten kann. Vorzugsweise ist die Zusammensetzung arm an, im wesentlichen frei von oder gänzlich frei von Bromid, Chlorid und Jodid, da diese unter Umständen zur Korrosion beitragen können.

Die Schichtdicke der erfindungsgemäß hergestellten Beschichtungen liegt vorzugsweise im Bereich von 0,005 bis 0,3 µm, besonders bevorzugt im Bereich von 0,01 bis 0,25 µm, ganz besonders bevorzugt im Bereich von 0,02 bis 0,2 µm, vielfach bei etwa 0,04 µm, bei etwa 0,06 µm, bei etwa 0,08 µm, bei etwa 0,1 µm, bei etwa 0,12 µm, bei etwa 0,14 µm, bei etwa 0,16 µm oder bei etwa 0,18 µm.

Vorzugsweise wird mit der Zusammensetzung eine Beschichtung mit einem Schichtgewicht ausgebildet, das bezogen nur auf den Gehalt an Titan oder/und Zirkonium im Bereich von 1 bis 200 mg/m² liegt berechnet als elementares Titan. Besonders bevorzugt liegt dieses Schichtgewicht im Bereich von 5 bis 150 mg/m², ganz besonders bevorzugt im Bereich von 8 bis 120 mg/m², insbesondere bei etwa 10, etwa 20, etwa 30, etwa 40, etwa 50, etwa 60, etwa 70, etwa 80, etwa 90, etwa 100 oder etwa 110 mg/m².

Vorzugsweise wird mit der Zusammensetzung eine Beschichtung mit einem Schichtgewicht ausgebildet, das bezogen nur auf Siloxane/Polysiloxane im Bereich von 0,2 bis 1000 mg/m² liegt berechnet als das entsprechende weitgehend durchkondensierte Polysiloxan. Besonders bevorzugt liegt dieses Schichtgewicht im Bereich von 2 bis 200 mg/m², ganz besonders bevorzugt im Bereich von 5 bis 150 mg/m², insbesondere bei etwa 10, etwa 20, etwa 30, etwa 40, etwa 50, etwa 60, etwa bei 70, etwa 80, etwa 90, etwa 100, etwa 110, etwa bei 120, etwa 130 oder etwa 140 mg/m².

Die mit der erfindungsgemäßen wässerigen Zusammensetzung hergestellte Beschichtung kann bei Bedarf anschließend mit mindestens einem Primer, Lack, Klebstoff oder/und mit einer lackähnlichen organischen Zusammensetzung beschichtet werden, wobei gegebenenfalls mindestens eine dieser weiteren Beschichtungen durch Erwärmen oder/und Bestrahlen gehärtet wird.

Die nach dem erfindungsgemäßen Verfahren beschichteten metallischen Substrate können verwendet werden in der Automobilindustrie, für Schienenfahrzeuge, in der Luft- und Raumfahrtindustrie, im Apparatebau, im Maschinenbau, in der Bauindustrie, in der Möbelindustrie, für die Herstellung von Leitplanken, Lampen, Profilen, Verkleidungen oder Kleinteilen, für die Herstellung von Karosserien oder Karosserieteilen, von Einzelkomponenten, vormontierten bzw. verbundenen Elementen, für die Herstellung von Geräten oder Anlagen, insbesondere von Haushaltsgeräten, Kontrolleinrichtungen, Prüfeinrichtungen oder Konstruktionselementen.

Ein Zusatz von Mangan hat sich überraschend als besonders vorteilhaft erwiesen: Obwohl offenbar keine oder fast keine Manganverbindung auf der metallischen Oberfläche abgeschieden wird, fördert der Zusatz die Abscheidung von Silan/Silanol/Siloxan/Polysiloxan auf der metallischen Oberfläche stark. Bei einem Zusatz von Nitroguanidin wurde überraschend festgestellt, dass die Optik der beschichteten Bleche sehr gleichmäßig ist, insbesondere auch auf sensiblen Oberflächen wie sandgestrahlten Eisen- bzw. Stahloberflächen. Ein Zusatz von Nitrit hat die Anrosteignung von Stahl-Substraten unerwartet deutlich verringert. Erstaunlicherweise wurde gefunden, dass jeder Zusatz mit einer signifikanten positiven Wirkung, der in dieser Anmeldung genannt wird, eine additive Wirkung zur Verbesserung der erfindungsgemäßen Beschichtung hat: Durch Auswahl mehrerer Zusätze ähnlich wie bei einem Baukastensystem lassen sich die verschiedenen Eigenschaften insbesondere eines Multimetallsystems weiter optimieren.

Es wurde jetzt überraschend festgestellt, dass eine gute Multimetall-Behandlung mit einer einzigen wässerigen Zusammensetzung erst möglich ist, wenn ein Komplexfluorid eingesetzt wurde, und dass eine sehr gute Multimetall-Behandlung mit einer einzigen wässerigen Zusammensetzung erst möglich ist, wenn mindestens zwei verschiedene Komplexfluoride verwendet werden wie z.B. solche auf Basis von Titan und von Zirkonium. Die einzeln eingesetzten Komplexfluoride zeigten bei den verschiedensten Versuchen nie Ergebnisse, die gleich gut waren wie für die Kombination dieser beiden Komplexfluoride, unabhängig davon, welche Zusätze darüber hinaus dazugegeben wurden.

Dass eine derart starke Qualitätssteigerung von wässerigen Zusammensetzungen mit einem Gehalt von Silan/Silanol/Siloxan/Polysiloxan möglich ist, war nicht absehbar. Aber auch ausgehend von wässerigen Zusammensetzungen auf Basis von einem Silan und nur einem Komplexfluorid auf Basis von Titan oder von Zirkonium (ausgehend von den Vergleichsbeispielen VB 3 bis VB 5) stellte sich überraschenderweise eine deutliche Steigerung des Qualitätsniveaus bei allen Versuchen heraus.

Es war darüber hinaus erstaunlich, dass sich bei der Prüfung der Lackhaftung sogar auf Stahl Steinschlag-Noten von 1 oder 2 ergaben: Stahl hat sich als das problematischste Material für wässerige Zusammensetzungen auf Basis von einem Silan und nur einem Komplexfluorid auf Basis von Titan oder von Zirkonium, insbesondere bei der Korrosionsbeständigkeit, erwiesen (siehe beispielsweise VB 1).

Bei Aluminium und Aluminium-Legierungen ist der CASS-Test erfahrungsgemäß problematisch, der jedoch auch mit den erfindungsgemäßen Zusammensetzungen deutlich besser als erwartet ausgefallen ist.

### Beispiele und Vergleichsbeispiele:

Die im Folgenden beschriebenen erfindungsgemäßen Beispiele (B) und die Vergleichsbeispiele (VB) sollen den Gegenstand der Erfindung näher erläutern.

Die wässerigen Badzusammensetzungen werden als Gemische entsprechend Tabelle 1 unter Verwendung von bereits vorhydrolysierten Silanen hergestellt. Sie enthalten jeweils vorwiegend ein Silan und gegebenenfalls auch geringe Gehalte an mindestens einem ähnlichen weiteren Silan, wobei auch hier vereinfachend von Silan und nicht von Silan/Silanol/Siloxan/Polysiloxan gesprochen wird und wobei sich in der Regel diese Vielfalt an Verbindungen, teilweise in größerer Zahl ähnlicher Verbindungen, auch bis in die Ausbildung der Beschichtung hindurchzieht, so dass auch in der Beschichtung oft mehrere ähnliche Verbindungen vorliegen. Das Vorhydrolysieren kann je nach Silan auch über mehrere Tage bei Raumtemperatur unter kräftigem Rühren andauern, soweit die einzusetzenden Silane nicht bereits vorhydrolysiert vorliegen. Zum Vorhydrolysieren des Silans wird das Silan in Wasser im Überschuss gegeben und gegebenenfalls mit Essigsäure katalysiert. Allein wegen des Einstellens des pH-Wertes wurde Essigsäure nur bei einzelnen Ausführungsvarianten zugesetzt. In einigen Ausführungsvarianten ist Essigsäure als Katalysator für die Hydrolyse bereits enthalten. Ethanol entsteht bei der Hydrolyse, wird aber nicht zugesetzt. Das fertige Gemisch wird frisch eingesetzt.

Dann werden jeweils pro Versuch mindestens 3 zuvor mit einem wässerigen alkalischen Reiniger gereinigte und mit Brauchwasser sowie danach mit VE-Wasser gespülte Bleche aus kaltgewalztem Stahl (CRS), Aluminiumlegierung Al6016 bzw. aus beidseitig feuerverzinktem oder elektrolytisch verzinktem Stahl bzw. aus Galvaneal® (ZnFe-Schicht auf Stahl) mit der entsprechenden Vorbehandlungsflüssigkeit der Tabelle 1 beidseitig bei 25 °C durch Spritzen, Tauchen oder Rollcoater-Behandlung in Kontakt gebracht. Dann wurden die derart behandelten Bleche bei 90 °C PMT getrocknet und anschließend mit einem kathodischen Automobil-Tauchlack (KTL) lackiert. Danach wurden diese Bleche mit einem vollständigen, kommerziell genutzten Automobillackaufbau (Füller, Decklack, Klarlack; insgesamt einschließlich KTL ca. 105 µm Dicke des Schichtenpakets) versehen und auf ihren Korrosionsschutz und ihre Lackhaftung geprüft. Die Zusammensetzungen und Eigenschaften der Behandlungsbäder sowie die Eigenschaften der Beschichtungen werden in Tabelle 1 zusammengefasst.

Das organofunktionelle Silan A ist ein Amino-funktionelles Trialkoxysilan und hat eine Aminogruppe pro Molekül. Es liegt wie alle hierbei eingesetzten Silane in der wässerigen Lösung weitgehend oder in etwa vollständig hydrolysiert vor. Das organofunktionelle Silan B hat jeweils eine endständige Aminogruppe sowie jeweils eine Ureidogruppe pro Molekül. Das nichtfunktionelle Silan C ist ein Bis-trialkoxysilan; das entsprechende hydrolysierte Molekül weist an zwei Siliciumatomen bis zu 6 OH-Gruppen auf.

Die Komplexfluoride von Aluminium, Silicium, Titan bzw. Zirkonium werden weitgehend auf der Basis eines MeF₆-Komplexes eingesetzt, die Komplexfluoride von Bor jedoch weitgehend auf der Basis eines MeF₄-Komplexes. Mangan wird als metallisches Mangan der jeweiligen Komplexfluoridlösung zugesetzt und darin gelöst. Diese Lösung wird der wässerigen Zusammensetzung beigemischt. Falls kein Komplexfluorid verwendet wird, wird Mangannitrat zugesetzt. Kupfer wird als Kupfer-II-nitrat und Magnesium als Magnesiumnitrat zugesetzt. Eisen und Mangan werden als Nitrate beigemischt. Das Peroxid wurde als verdünntes Wasserstoffperoxid eingesetzt. Nitrit wird als Natriumnitrit zugesetzt, Nitrat im übrigen als Natriumnitrat oder als Salpetersäure. Phosphat wird als Trinatriumorthophosphathydrat verwendet, Phosphonat als Diphosphonsäure mit einer mittellangen Alkylkette in der Mitte des Moleküls.

Die in der wässerigen Zusammensetzung - Konzentrat oder/und Bad - enthaltenen Silane sind Monomere, Oligomere, Polymere, Copolymere oder/und Reaktionsprodukte mit weiteren Komponenten aufgrund Hydrolysereaktionen, Kondensationsreaktionen oder/und weiteren Reaktionen. Die Reaktionen erfolgen vor allem in der Lösung, beim Trocknen bzw. gegebenenfalls auch beim Härten der Beschichtung, insbesondere bei Temperaturen über 70 °C. Alle Konzentrate und Bäder erwiesen sich über eine Woche stabil und ohne Veränderungen und ohne Ausfällungen. Es wurde kein Ethanol zugesetzt. Gehalte an Ethanol in den Zusammensetzungen rührten nur aus chemischen Reaktionen.

Der pH-Wert wird bei den meisten Beispielen und Vergleichsbeispielen eingestellt, bei Anwesenheit von mindestens einem Komplexfluorid mit Ammoniak, in anderen Fällen mit einer Säure. Alle Bäder zeigen eine gute Qualität der Lösung und fast immer eine gute Badstabilität. Die Badstabilität hat sich nur bei VB 16 als zeitlich begrenzt erwiesen. Es gibt keine Ausfällungen in den Bädern. Nach dem Beschichten mit der Silan-haltigen Lösung wird die Silan enthaltende Beschichtung ohne stärkeres Trocknen zuerst einmal mit VE-Wasser kurz gespült. Danach werden die beschichteten Bleche bei 120 °C im Trockenschrank über 5 Minuten getrocknet. Die visuelle Prüfung der Beschichtungen kann nur bei den Beschichtungen auf Stahl aufgrund der Interferenzfarben signifikant durchgeführt werden und lässt die Gleichmäßigkeit der Beschichtung beurteilen. Die Beschichtungen ohne jeden Komplexfluoridgehalt sind recht ungleichmäßig. Eine Beschichtung mit Titan- und mit Zirkon-Komplexfluorid hat sich überraschend als deutlich gleichmäßiger erwiesen als wenn nur eines dieser Komplexfluoride appliziert worden wäre. Ein Zusatz von Nitroguanidin, Nitrat oder Nitrit verbessert ebenfalls die Gleichmäßigkeit der Beschichtung. Teilweise erhöht sich die Schichtdicke mit der Konzentration dieser Substanzen.

**Tabelle 1: Zusammensetzungen von Bädern in g/L bezogen auf Festkörpergehalte, bei Silanen bezogen auf das Gewicht der hydrolysierten Silane; Restgehalt: Wasser und meistens eine sehr geringe Menge an Äthanol; Prozessdaten und Eigenschaften der Beschichtungen**

| Beispiele / VB | VB31 | VB32 | VB33 | VB34 | VB35 | VB36 | VB37 | VB38 | VB39 | VB40 | VB41 | VB1 | VB42 | B2 | VB3 | VB4 | VB5 |
|---|---|---|---|---|---|---|---|---|---|---|---|---|---|---|---|---|---|
| Organofunkt. Silan A | 0,2 | - | 0,2 | 0,2 | 0,2 | 0,2 | 0,2 | 0,2 | 0,2 | 0,2 | 0,2 | 0,2 | 0,2 | 0,2 | 0,2 | 0,2 | 0,2 |
| Nicht-funktion. Silan C | - | 0,2 | - | - | - | - | - | - | - | 0,2 | - | - | - | - | - | - | 0,1 |
| H₂TiF₆ als Ti | - | - | 0,2 | - | - | 0,2 | 0,2 | 0,2 | 0,2 | 0,2 | 0,2 | 0,2 | 0,2 | 0,2 | 0,2 | 0,2 | 0,2 |
| H₂ZrF₆ als Zr | - | - | - | 0,2 | - | 0,2 | 0,2 | 0,2 | 0,2 | 0,2 | 0,2 | 0,2 | 0,2 | 0,2 | 0,2 | 0,2 | 0,2 |
| Mn | - | - | - | - | 0,3 | - | 0,1 | 0,3 | 0,5 | 0,5 | - | 0,3 | 0,2 | 0,2 | 0,2 | 0,2 | 0,2 |
| H₂O₂ | - | - | - | - | - | - | - | - | - | - | 0,03 | 0,03 | - | - | - | - | - |
| Nitrit | - | - | - | - | - | - | - | - | - | - | - | - | - | - | 0,06 | 0,06 | 0,06 |
| Nitrat | - | - | - | - | - | - | - | - | - | - | - | - | 0,5 | 0,5 | - | 0,5 | 0,5 |
| Na₃PO₄ als PO₄ | - | - | - | - | - | - | - | - | - | - | - | - | - | 2 | - | - | - |
| Essigsäure | - | 0,02 | - | - | 0,35 | - | - | - | - | 0,02 | - | - | - | - | - | - | 0,01 |
| pH-Wert | 10,5 | 5 | 4 | 4 | 4,5 | 4 | 4 | 4 | 4 | 4 | 4 | 4 | 4 | 4 | 4 | 4 | 4 |
| Gitterschnitt BMW: Note | | | | | | | | | | | | | | | | | |
| Stahl | 4 | 3 | 5 | 3 | 2-3 | 2 | 2 | 1 | 1 | 3 | 1 | 0 | 1 | 0 | 0 | 0 | 0 |
| E-Zink auf Stahl | 3 | 4 | 4 | 4 | 3 | 1 -2 | 2 | 1 | 1 | 2 | 1 | 0 | 1 | 0 | 0 | 0 | 0 |
| Feuerzink auf Stahl | 2 | 5 | 4 | 4 | 2 | 1 | 1 | 0 | 0 | 0 | 1 | 0 | 1 | 1 | 0 | 0 | 0 |
| Al 6016 | 2 | 3 | 2 | 2 | 3 | 1 | 1 | 1 | 1 | 0 | 1 | 1 | 1 | 0 | 0 | 0 | 0 |
| Galvaneal® | 1 | 2 | 1 | 2 | 1-2 | 1 | 1 | 1 | 0 | 0 | 1 | 0 | 1 | 0 | 0 | 0 | 0 |
| 10 Zyklen VDA mm Unterwanderung: | | | | | | | | | | | | | | | | | |
| Stahl | 8 | 7 | 7 | 4 | 7 | 3 | 2 | 2 | 1,5 | 1,5 | 2 | 1,5 | 2 | 1 | 2 | 1,5 | 1,5 |
| E-Zink auf Stahl | 5 | 5 | 3 | 4 | 5 | 2 | 1 | 1 | 1 | 1,5 | 1,5 | 1 | 1,5 | 0,5 | 1 | 1 | 1 |
| Feuerzink auf Stahl | 4 | 5 | 2,5 | 3,5 | 4 | < 1 | 1 | < 1 | < 1 | < 1 | 1,5 | < 1 | 1 | < 1 | < 1 | < 1 | < 1 |
| Galvaneal® | 2 | 3 | 2 | 1,5 | 3 | < 1 | < 1 | < 1 | < 1 | < 1 | 1 | < 1 | 1 | < 1 | 1 | 1 | 0 |
| Steinschlag nach VDA-Belastung: Note | | | | | | | | | | | | | | | | | |
| Stahl | 5 | 5 | 4 | 4 | 5 | 2-3 | 2 | 1 | 1 | 1 | 2-3 | 2 | 2 | 1 | 2-3 | 2 | 1-2 |
| E-Zink auf Stahl | 5 | 5 | 3 | 4 | 4 | 2 | 1 -2 | 1 | 1 | 2 | 2-3 | 2 | 1 -2 | 1 | 1 -2 | 1 -2 | 1 |
| Feuerzink auf Stahl | 5 | 5 | 3 | 4 | 4 | 1 | 1 | 1 | 0-1 | 1 | 1 -2 | 1 | 1 -2 | 1 | 1 | 1 | 1 |
| Galvaneal® | 4 | 4 | 2 | 3 | 4 | 1 -2 | 1 | 1 | 1 | 2 | 1 -2 | 1 | 1 -2 | 1 | 1 | 1 | 1 |
| Salzsprühtest 1008 h: | | | | | | | | | | | | | | | | | |
| Stahl | 7 | 8 | 4 | 3,5 | 7 | 2 | 2 | 1,5 | 1 | 2,5 | 2,5 | 2 | 2,5 | 1,5 | 2 | 1,5 | 1,5 |
| Beispiele / VB | VB31 | VB32 | VB33 | VB34 | VB35 | VB36 | VB37 | VB38 | VB39 | VB40 | VB41 | VB1 | VB42 | B2 | VB3 | VB4 | VB5 |
| CASS-Test mm Unterwanderung: | | | | | | | | | | | | | | | | | |
| Al 6016 | 6 | 5 | 3,5 | 3,5 | 6 | 2,5 | 2 | 1,5 | 1,5 | 1 | 2,5 | 2 | 2,5 | 2 | 2 | 2 | 2 |

| Beispiele / VB | VB6 | VB7 | VB43 | VB44 | VB8 | VB9 | B 10 | VB11 | VB12 | VB13 | VB45 | VB14 | VB46 | VB15 | | VB16 | |
|---|---|---|---|---|---|---|---|---|---|---|---|---|---|---|---|---|---|
| Organofunkt. Silan A | 0,2 | 0,2 | 0,2 | 0,2 | 0,2 | 0,2 | 0,2 | 0,2 | 0,1 | - | 0,2 | 0,2 | 0,2 | 0,2 | | 0,2 | |
| Organofunkt. Silan B | - | - | - | - | - | - | - | - | 0,2 | 0,2 | - | - | - | - | | - | |
| H₂TiF₆ als Ti | 0,2 | 0,2 | - | 0,2 | 0,2 | 0,2 | 0,2 | 0,2 | 0,2 | 0,2 | - | 0,2 | 0,2 | 0,2 | | - | |
| H₂ZrF₆ als Zr | 0,2 | 0,2 | - | 0,2 | 0,2 | 0,4 | 0,4 | 0,2 | 0,2 | 0,2 | - | 0,2 | 0,2 | 0,2 | | - | |
| TiZrCarbonat | - | - | - | - | - | - | - | - | - | - | - | - | - | - | | 0,4 | |
| Mn | 0,3 | 0,3 | - | - | 0,3 | 0,2 | 0,2 | 0,3 | 0,3 | 0,3 | - | 0,3 | - | 0,3 | | 0,3 | |
| Nitrit | 0,06 | 0,06 | - | - | - | - | - | - | - | - | - | - | - | - | | - | |
| Nitrat | - | 0,5 | - | - | - | - | 1 | - | - | - | - | - | - | - | | - | |
| Nitroguanidin | - | - | 0,2 | 0,2 | 0,2 | 0,3 | 0,3 | 0,2 | 0,2 | 0,2 | - | - | - | - | | - | |
| Aminoguanidin | - | - | - | - | - | - | - | - | - | - | 0,2 | 0,2 | - | - | | - | |
| Na₃PO₄ als PO₄ | - | - | - | - | - | - | - | 2 | - | - | - | - | - | - | | - | |
| Phosphonat | - | - | - | - | | - | - | - | - | - | | - | 0,05 | 0,05 | | 0,05 | |
| Essigsäure | - | - | 0,3 | - | - | - | - | - | - | - | - | - | - | - | | 0,8 | |
| pH-Wert | 4 | 4 | 7 | 4 | 4 | 4 | 4 | 4 | 4 | 4 | 11 | 4 | 4 | 4 | | 7 | |
| Gitterschnitt BMW: Note | | | | | | | | | | | | | | | | | |
| Stahl | 1 | | 0-1 | | 2 | 1 | 1 | 0 | 0 | 1 | 0-1 | 0-1 | 2 | 1 | 2 | 2 | 1 |
| E-Zink auf Stahl | 1 | | 1 | | 1 | 2 | 1 | 1 | 0 | 1 | 1 | 1 | 1 | 1 | 1 -2 | 1 | 0-1 |
| Feuerzink auf Stahl | 0 | | 0 | | 2 | 0 | 0 | 0 | 0 | 0 | 0 | 0 | 2 | 0 | 1 -2 | 1 | 1 |
| Al 6016 | 1 | | 1 | | 2 | 1 | 1 | 1 | 0 | 1 | 1 | 1 | 2 | 1 | 2 | 1 | 0-1 |
| Galvaneal® | 1 | | 1 | | 1 | 1 | 1 | 0 | 0 | 1 | 1 | 1 | 1 | 1 | 1 | 1 | 0-1 |
| 10 Zyklen VDA mm Unterwdg.: | | | | | | | | | | | | | | | | | |
| Stahl | 2 | | 1,5 | | 8 | 2,5 | 2,5 | 2 | 1,5 | 2 | 1,5 | 1,5 | 8 | 2,5 | 2,5 | 2 | 5 |
| E-Zink auf Stahl | 1 | | 1 | | 5 | 1,5 | 1,8 | 1,5 | 1 | 1 | 1 | 1 | 5 | 1 | 2 | 1,5 | 3 |
| Feuerzink auf Stahl | 1 | | 1 | | 4 | < 1 | 1 | < 1 | < 1 | < 1 | 1 | 1 | 4 | < 1 | 1 | < 1 | 2 |
| Galvaneal® | < 1 | | < 1 | | 2 | < 1 | < 1 | < 1 | < 1 | < 1 | < 1 | < 1 | 2 | < 1 | 1 | 1 | 1 |
| Steinschlag nach VDA-Belastung, Note | | | | | | | | | | | | | | | | | |
| Stahl | 1 | | 0-1 | | 5 | 2 | 1 -2 | 1 | 1 | 1 | 0-1 | 0-1 | 5 | 1 | 3 | 1 -2 | 3 |
| E-Zink auf Stahl | 1 | | 1 | | 5 | 1 -2 | 1 -2 | 1-2 | 1 | 1 | 1 | 1 | 5 | 1 | 2 | 1 | 3 |
| Feuerzink auf Stahl | 1 | | 1 | | 5 | 1 | 1 | 1 | 1 | 1 | 1 | 1 | 5 | 1 | 2 | 1 | 2 |
| Galvaneal® | 1 | | 1 | | 4 | 1 | 1 | 1 | 0 | 1 | 1 | 1 | 4 | 1 | 1 | 1 | 2 |
| Salzsprühtest 1008 h | | | | | | | | | | | | | | | | | |
| Stahl | 1,5 | | 1 | | 7 | 2,5 | 2 | 1 | 1 | 1,5 | 1 | 1 | 7 | 1,5 | 2,5 | 1,8 | 4 |
| CASS-Test mm Unterwanderung | | | | | | | | | | | | | | | | | |
| Al 6016 | 1,5 | | 1,5 | | 6 | 3 | 1,5 | 1,5 | 1 | 1,5 | 1,5 | 1,5 | 6 | 1,5 | 2 | 1 | 3 |

| Beispiele / VB | VB17 | | VB18 | | VB47 | VB48 | VB19 | VB20 | | VB21 | | VB22 | | VB23 | | VB49 | |
|---|---|---|---|---|---|---|---|---|---|---|---|---|---|---|---|---|---|
| Organofunkt. Silan A | 0,2 | | 0,2 | | 0,2 | 0,2 | 0,2 | 0,2 | | 0,2 | | 0,2 | | 0,2 | | - | |
| H₂TiF₆ als Ti | - | | - | | - | - | - | - | | 0,2 | | - | | 0,2 | | 0,2 | |
| H₂ZrF₆ als Zr | - | | - | | - | - | - | 0,2 | | - | | 0,2 | | - | | - | |
| H₃AlF₆ als Al | 0,2 | | - | | - | 0,2 | 0,2 | 0,2 | | 0,2 | | - | | - | | - | |
| H₂BF₄ als B | - | | 0,2 | | - | 0,2 | 0,2 | - | | - | | 0,2 | | 0,2 | | - | |
| H₂SiF₆ als Si | - | | - | | 0,2 | - | - | - | | - | | - | | - | | - | |
| Mn | 0,3 | | 0,3 | | 0,3 | - | 0,3 | 0,3 | | 0,3 | | 0,3 | | 0,3 | | - | |
| Nitrat | - | | - | | - | - | - | - | | - | | - | | - | | - | |
| Nitroguanidin | 0,2 | | 0,2 | | 0,2 | - | 0,2 | 0,2 | | 0,2 | | 0,2 | | 0,2 | | - | |
| pH-Wert | 4 | | 4 | | 4 | 4 | 4 | 4 | | 4 | | 4 | | 4 | | 11 | |

Die Badzusammensetzungen zeigen sich alle in der kurzen Einsatzzeit als stabil und gut applizierbar. Es gibt keine Ausfällungen und keine farblichen Veränderungen außer bei Zusammensetzungen mit einem Gehalt an Peroxid und Titankomplexfluorid. Es gibt keine Unterschiede im Verhalten, im visuellen Eindruck und bei den Testergebnissen zwischen den verschiedenen Beispielen und Vergleichsbeispielen, die auf die Behandlungsbedingungen wie z.B. Applikation durch Spritzen, Tauchen oder Rollcoater-Behandlung zurückgeführt werden können. Die hierbei entstandenen Filme sind transparent und fast alle weitgehend gleichmäßig. Sie zeigen keine Einfärbung der Beschichtung. Die Struktur, der Glanz und die Farbe der metallischen Oberfläche erscheinen durch die Beschichtung nur wenig verändert. Bei einem Gehalt an Titan- oder/und Zirkoniumkomplexfluorid entstehen insbesondere auf Stahloberflächen irisierende Schichten. Die Kombination von mehreren Silanen hat bisher keine signifikante Verbesserung des Korrosionsschutzes ergeben, kann jedoch nicht ausgeschlossen werden. Darüber hinaus wurde auf Aluminium-reichen metallischen Oberflächen ein Gehalt an H₃AlF₆ ermittelt aufgrund entsprechender Reaktionen in der wässerigen Zusammensetzung. Die Kombination von zwei oder drei Komplexfluoriden in der wässerigen Zusammensetzung hat sich jedoch überraschend außerordentlich bewährt.

Die Schichtdicke der derart hergestellten Beschichtungen lag - auch von der Art des Auftrags abhängig, der anfangs in gesonderten Versuchen variiert wurde - im Bereich von 0,01 bis 0,16 µm, meistens im Bereich von 0,02 bis 0,12 µm, oft bei bis zu 0,08 µm, wobei sie deutlich größer war bei Zusatz von organischem Polymer.

Die Korrosionsschutznoten gehen bei der Gitterschnitt-Prüfung gemäß DIN EN ISO 2409 nach Lagerung über 40 Stunden in 5 %iger NaCI-Lösung entsprechend BMW-Spezifikation GS 90011 von 0 bis 5, wobei 0 die besten Werte wiedergibt. Beim Salzsprüh-Kondenswasser-Wechseltest über 10 Zyklen gemäß dem VDA-Prüfblatt 621-415 mit wechselnder Korrosionsbelastung zwischen Salzsprühtest, Schwitzwassertest und Trocknungspause wird die Unterwanderung einseitig vom Ritz aus gemessen und in mm angegeben, wobei die Unterwanderung möglichst klein sein soll. Beim Steinschlag-Test gemäß DIN 55996-1 werden die beschichteten Bleche im Anschluss an den oben genannten VDA-Wechseltest über 10 Zyklen mit Stahlschrot beschossen: Das Schadensbild wird mit Kennwerten von 0 bis 5 charakterisiert, wobei 0 die besten Ergebnisse wiedergibt. Beim Salzsprühtest gemäß DIN 50021 SS werden die beschichteten Bleche bei bis zu 1008 Stunden einer korrosiven Natriumchloridlösung durch Sprühen ausgesetzt; danach wird die Unterwanderung in mm vom Ritz aus gemessen, wobei der Ritz mit einem genormten Stichel bis zur metallischen Oberfläche hergestellt wird und wobei die Unterwanderung möglichst klein sein soll. Beim CASS-Test gemäß DIN 50021 CASS werden die beschichteten, aus einer Aluminium-Legierung bestehenden Bleche über 504 Stunden einer speziellen korrosiven Atmosphäre durch Sprühen ausgesetzt; danach wird die Unterwanderung in mm vom Ritz aus gemessen, die möglichst klein sein soll.

Aufgrund der mehrere Jahrzehnte dauernden Entwicklung der ZinkManganNickel-Phosphatierung von Karosserien sind die derartigen, heute hergestellten Phosphatschichten außerordentlich hochwertig. Dennoch gelang es wider Erwarten auch bei den erst seit wenigen Jahren eingesetzten Silan enthaltenden wässerigen Zusammensetzungen, die gleichen hochwertigen Eigenschaften auch mit den Silan-haltigen Beschichtungen zu erreichen, obwohl hierzu größere Anstrengungen erforderlich waren.

Weitere Versuche an Karosserie-Elementen haben gezeigt, dass gegebenenfalls die elektrochemischen Bedingungen des KTL-Bades geringfügig an die andersartige Beschichtung angepasst werden könnten, aber ansonsten die hervorragenden Eigenschaften, die bei Laborversuchen gewonnen wurden, auch auf Karosserie-Elemente übertragbar sind.

## Patentansprüche

1. Verfahren zur Beschichtung von metallischen Oberflächen mit einer Silan/Silanol/Siloxan/Polysiloxan enthaltenden Zusammensetzung, **dadurch gekennzeichnet, dass** die Zusammensetzung:
a) mindestens eine Verbindung a) ausgewählt aus Silanen, Silanolen, Siloxanen und Polysiloxanen, wobei die Zusammensetzung einen Gehalt an Silan/Silanol/Siloxan/Polysiloxan im Bereich von 0,02 bis 2 g/L aufweist, berechnet auf der Basis der entsprechenden Silanole,
b) mindestens eine Titan-, Hafnium-, Zirkonium-, Aluminium- oder/und Bor-haltigen Verbindung b), von denen mindestens eine ein Komplexfluorid ist, wobei die Zusammensetzung einen Gehalt an Verbindungen b) im Bereich von 0,1 bis 5 g/L aufweist, berechnet als Summe der entsprechenden Metalle,
c) Mangankationen oder/und mindestens eine entsprechende Verbindung c), wobei die Zusammensetzung einen Gehalt an Mangankationen oder/und entsprechender Verbindung c) im Bereich von 0,08 bis 0,3 g/L aufweist berechnet als Mangan,
sowie mindestens eine Substanz d) enthält ausgewählt aus:
d₁) Aminoguanidin,
d₂) Anionen von Nitrit oder/und Verbindungen mit mindestens einer Nitro-Gruppe,
d₃) Verbindungen auf Basis von Peroxid und
d₄) Phosphor-haltigen Verbindungen, Anionen von mindestens einem Phosphat oder/und Anionen von mindestens einem Phosphonat sowie außerdem
e) Wasser enthält,
wobei der Gehalt an allen Arten der Substanzen d) im Bereich von 0,01 bis 25 g/L liegt,
wobei die Zusammensetzung einen Gehalt an Nitrat im Bereich von 0,1 bis 5 g/L aufweist.

2. Verfahren nach Anspruch 1, **dadurch gekennzeichnet, dass** der pH-Wert der Zusammensetzung größer als 1,5 und kleiner als 9 ist.

3. Verfahren nach Anspruch 1 oder 2, **dadurch gekennzeichnet, dass** die Zusammensetzung mindestens ein Silan oder/und das entsprechende Silanol/Siloxan/Polysiloxan mit jeweils mindestens einer Amino-Gruppe, Harnstoff- oder/und Ureido-Gruppe enthält.

4. Verfahren nach einem der vorstehenden Ansprüche, **dadurch gekennzeichnet, dass** die Zusammensetzung einen Gehalt an mindestens einem Komplexfluorid b) ausgewählt aus Komplexfluoriden von Titan, Hafnium, Zirkonium, Aluminium und Bor aufweist.

5. Verfahren nach einem der vorstehenden Ansprüche, **dadurch gekennzeichnet, dass** die Zusammensetzung einen Gehalt an freiem Fluorid im Bereich von 0,001 bis 3 g/L aufweist, berechnet als F⁻.

6. Verfahren nach einem der vorstehenden Ansprüche, **dadurch gekennzeichnet, dass** die Zusammensetzung einen Gehalt an mindestens einer Art Anionen ausgewählt aus Carboxylaten oder/und mindestens einer entsprechenden, nicht oder/und nur teilweise dissoziierten Verbindung enthält.

7. Verfahren nach einem der vorstehenden Ansprüche, **dadurch gekennzeichnet, dass** die Zusammensetzung einen Gehalt an mindestens einer Art Kationen ausgewählt aus Alkalimetallionen und Ammoniumionen oder/und mindestens eine entsprechende Verbindung enthält.

8. Verfahren nach einem der vorstehenden Ansprüche, **dadurch gekennzeichnet, dass** die Zusammensetzung einen Gehalt an mindestens einer Verbindung ausgewählt aus Alkoxiden, Carbonaten, Chelaten, Tensiden und Additiven wie z.B. Bioziden oder/und Entschäumern aufweist.

9. Verfahren nach einem der vorstehenden Ansprüche, **dadurch gekennzeichnet, dass** mit der wässerigen Beschichtung im gleichen Bad ein Mix aus verschiedenen metallischen Werkstoffen beschichtet wird.

10. Verfahren nach einem der vorstehenden Ansprüche, **dadurch gekennzeichnet, dass** mit der Zusammensetzung eine Beschichtung ausgebildet wird, die bezogen nur auf Titan oder/und Zirkonium im Bereich von 1 bis 200 mg/m² liegt berechnet als Titan.

11. Verfahren nach einem der vorstehenden Ansprüche, **dadurch gekennzeichnet, dass** mit der Zusammensetzung eine Beschichtung mit einem Schichtgewicht ausgebildet wird, die bezogen nur auf Siloxane/Polysiloxane im Bereich von 0,2 bis 1000 mg/m² liegt berechnet als das entsprechende weitgehend durchkondensierte Polysiloxan.

12. Verfahren nach einem der vorstehenden Ansprüche, **dadurch gekennzeichnet, dass** die mit der wässerigen Zusammensetzung hergestellte Beschichtung anschließend mit mindestens einem Primer, Lack, Klebstoff oder/und mit einer lackähnlichen organischen Zusammensetzung beschichtet wird, wobei gegebenenfalls mindestens eine dieser weiteren Beschichtungen durch Erwärmen oder/und Bestrahlen gehärtet wird.

13. Wässerige Zusammensetzung zur Beschichtung von metallischen Oberflächen, **dadurch gekennzeichnet, dass** die Zusammensetzung:
a) mindestens eine Verbindung a) ausgewählt aus Silanen, Silanolen, Siloxanen und Polysiloxanen, wobei die Zusammensetzung einen Gehalt an Silan/Silanol/Siloxan/Polysiloxan im Bereich von 0,02 bis 2 g/L aufweist, berechnet auf der Basis der entsprechenden Silanole,
b) mindestens eine Titan-, Hafnium-, Zirkonium-, Aluminium- oder/und Bor-haltigen Verbindung b), von denen mindestens eine ein Komplexfluorid ist, wobei die Zusammensetzung einen Gehalt an Verbindungen b) im Bereich von 0,1 bis 5 g/L aufweist, berechnet als Summe der entsprechenden Metalle,
c) Mangankationen oder/und mindestens eine entsprechende Verbindung c), wobei die Zusammensetzung einen Gehalt an Mangankationen oder/und entsprechender Verbindung c) im Bereich von 0,08 bis 0,3 g/L aufweist berechnet als Mangan,
sowie mindestens eine Substanz d) enthält ausgewählt aus:
d₁) Aminoguanidin,
d₂) Anionen von Nitrit oder/und Verbindungen mit mindestens einer Nitro-Gruppe,
d₃) Verbindungen auf Basis von Peroxid und
d₄) Phosphor-haltigen Verbindungen, Anionen von mindestens einem Phosphat oder/und Anionen von mindestens einem Phosphonat sowie außerdem e) Wasser enthält,
wobei der Gehalt an allen Arten der Substanzen d) im Bereich von 0,01 bis 25 g/L liegt,
wobei die Zusammensetzung einen Gehalt an Nitrat im Bereich von 0,1 bis 5 g/L aufweist.

14. Verwendung der nach dem Verfahren nach einem der Ansprüche 1 bis 12 beschichteten metallischen Substrate in der Automobilindustrie, für Schienenfahrzeuge, in der Luft- und Raumfahrtindustrie, im Apparatebau, im Maschinenbau, in der Bauindustrie, in der Möbelindustrie, für die Herstellung von Leitplanken, Lampen, Profilen, Verkleidungen oder Kleinteilen, für die Herstellung von Karosserien oder Karosserieteilen, von Einzelkomponenten, vormontierten bzw. verbundenen Elementen, für die Herstellung von Geräten oder Anlagen, insbesondere von Haushaltsgeräten, Kontrolleinrichtungen, Prüfeinrichtungen oder Konstruktionselementen.

## Claims

1. A method for coating metallic surfaces with a composition comprising silane/silanol/siloxane/polysiloxane, wherein the composition comprises:
a) at least one compound a) selected from silanes, silanols, siloxanes and polysiloxanes, the composition having a silane/silanol/siloxane/polysiloxane content in the range from 0.02 to 2 g/L, calculated on the basis of the corresponding silanols,
b) at least one titanium-, hafnium-, zirconium-, aluminum- and/or boron-containing compound b), of which at least one is a complex fluoride, the composition having a content of compounds b) in the range from 0.1 to 5 g/L, calculated as the sum of the corresponding metals,
c) manganese cations and/or at least one corresponding compound c), the composition having a content of manganese cations and/or corresponding compound c) in the range from 0.08 to 0.3 g/L, calculated as manganese,
and also at least one substance d) selected from:
d₁) aminoguanidine,
d₂) anions of nitrate and/or compounds having at least one nitro group,
d₃) compounds based on peroxide and
d₄) phosphorus-containing compounds, anions of at least one phosphate and/or anions of at least one posphonate, and also, furthermore,
e) comprises water,
where the content of all kinds of substances d) is in the range from 0.01 to 25 g/L, where the composition has a content of nitrate in the range from 0.1 to 5 g/l.

2. The method according to claim 1, wherein the pH of the composition is greater than 1.5 and less than 9.

3. The method according to claim 1 or 2, wherein the composition comprises at least one silane and/or the corresponding silanol/siloxane/polysiloxane having in each case at least one amino group, urea group, and/or ureido group.

4. The method according to any of the preceding claims, wherein the composition has a content of at least one complex fluoride b) selected from complex fluorides of titanium, hafnium, zirconium, aluminium and boron.

5. The method according to any of the preceding claims, wherein the composition has a content of free fluoride in the range from 0.001 to 3 g/L, calculated as F⁻.

6. The method according to any of the preceding claims, wherein the composition includes a content of at least one kind of anions selected from carboxylates and/or at least one corresponding compound which is not dissociated and/or is only partially dissociated.

7. The method according to any of the preceding claims, wherein the composition includes a content of at least one kind of cations selected from alkali metal ions and ammonium ions and/or at least one corresponding compound.

8. The method according to any of the preceding claims, wherein the composition has a content of at least one compound selected from alkoxides, carbonates, chelates, surfactants and additives such as, for example, biocides and/or defoamers.

9. The method according to any of the preceding claims, wherein a mix of different metallic materials is coated with the aqueous coating in the same bath.

10. The method according to any of the preceding claims, wherein a coating is formed with the composition which is situated in the range from 1 to 200 mg/m², based only on titanium and/or zirconium, calculated as titanium.

11. The method according to any of the preceding claims, wherein a coating is formed with the composition which has a film weight which is situated in the range from 0.2 to 1000 mg/m², based only on siloxanes/polysiloxanes, calculated as the corresponding largely fully condensed polysiloxane.

12. The method according to any of the preceding claims, wherein the coating produced with the aqueous composition is subsequently coated with at least one primer, paint, adhesive and/or with a paintlike organic composition, where optionally at least one of these further coatings is cured by heating and/or irradiation.

13. An aqueous composition for coating metallic surfaces, wherein the composition comprises:
a) at least one compound a) selected from silanes, silanols, siloxanes and polysiloxanes, the composition having a silane/silanol/siloxane/polysiloxane content in the range from 0.02 to 2 g/L, calculated on the basis of the corresponding silanols,
b) at least one titanium-, hafnium-, zirconium-, aluminum- and/or boron-containing compound b), of which at least one is a complex fluoride, the composition having a content of compounds b) in the range from 0.1 to 5 g/L, calculated as the sum of the corresponding metals,
c) manganese cations and/or at least one corresponding compound c), the composition having a content of manganese cations and/or corresponding compound c) in the range from 0.08 to 0.3 g/L, calculated as manganese,
and also at least one substance d) selected from:
d₁) aminoguanidine,
d₂) anions of nitrate and/or compounds having at least one nitro group,
d₃) compounds based on peroxide and
d₄) phosphorus-containing compounds, anions of at least one phosphate and/or anions of at least one posphonate, and also, furthermore,
e) comprises water,
where the content of all kinds of substances d) is in the range from 0.01 to 25 g/L, where the composition has a content of nitrate in the range from 0.1 to 5 g/l.

14. The use of the metallic substrates coated by the method according to any of claims 1 to 12 in the automotive industry, for rail vehicles, in the aerospace industry, in apparatus construction, in mechanical engineering, in the building industry, in the furniture industry, for producing vehicle barriers, lamps, profiles, linings or small parts, for producing bodywork or bodywork parts, individual components, preassembled and/or connected elements, for producing appliances or installations, especially household appliances, control devices, testing devices or structural elements.

## Revendications

1. Procédé de revêtement de surfaces métalliques avec une composition contenant un silane/silanol/siloxane/polysiloxane, **caractérisé en ce que** la composition comprend :
a) au moins un composé a) choisi parmi les silanes, les silanols, les siloxanes et les polysiloxanes, la composition présentant une teneur en silane/silanol/siloxane/polysiloxane dans la plage allant de 0,02 à 2 g/l, calculée sur la base des silanols correspondants,
b) au moins un composé b) contenant du titane, du hafnium, du zirconium, de l'aluminium et/ou du bore, au moins l'un d'eux étant un fluorure complexe, la composition présentant une teneur en composés b) dans la plage allant de 0,1 à 5 g/l, calculée en tant que somme des métaux correspondants,
c) les cations de manganèse et/ou au moins un composé c) correspondant, la composition présentant une teneur en cations de manganèse et/ou composé c) correspondant dans la plage allant de 0,08 à 0,3 g/l, calculée en tant que manganèse,
ainsi qu'au moins une substance d) choisie parmi :
d₁) l'aminoguanidine,
d₂) les anions de nitrite et/ou les composés contenant au moins un groupe nitro,
d₃) les composés à base de peroxyde et
d₄) les composés contenant du phosphore, les anions d'au moins un phosphate et/ou les anions d'au moins un phosphonate, et comprend également
e) de l'eau,
la teneur en tous les types de substances d) étant dans la plage allant de 0,01 à 25 g/l,
la composition présentant une teneur en nitrate dans la plage allant de 0,1 à 5 g/l.

2. Procédé selon la revendication 1, **caractérisé en ce que** le pH de la composition est supérieur à 1,5 et inférieur à 9.

3. Procédé selon la revendication 1 ou 2, **caractérisé en ce que** la composition contient au moins un silane et/ou le silanol/siloxane/polysiloxane correspondant contenant à chaque fois au moins un groupe amino, un groupe urée et/ou un groupe uréido.

4. Procédé selon l'une quelconque des revendications précédentes, **caractérisé en ce que** la composition présente une teneur en au moins un fluorure complexe b) choisi parmi les fluorures complexes de titane, hafnium, zirconium, aluminium et bore.

5. Procédé selon l'une quelconque des revendications précédentes, **caractérisé en ce que** la composition présente une teneur en fluorure libre dans la plage allant de 0,001 à 3 g/l, calculée en tant que F⁻.

6. Procédé selon l'une quelconque des revendications précédentes, **caractérisé en ce que** la composition présente une teneur en au moins un type d'anions choisi parmi les carboxylates et/ou au moins un composé non et/ou uniquement partiellement dissocié correspondant.

7. Procédé selon l'une quelconque des revendications précédentes, **caractérisé en ce que** la composition présente une teneur en au moins un type de cations choisi parmi les ions de métaux alcalins et les ions ammonium et/ou au moins un composé correspondant.

8. Procédé selon l'une quelconque des revendications précédentes, **caractérisé en ce que** la composition présente une teneur en au moins un composé choisi parmi les alcoxydes, les carbonates, les chélates, les tensioactifs et les additifs tels que p. ex. les biocides et/ou les antimousses.

9. Procédé selon l'une quelconque des revendications précédentes, **caractérisé en ce qu'**un mélange de différents matériaux métalliques est revêtu dans le même bain avec le revêtement aqueux.

10. Procédé selon l'une quelconque des revendications précédentes, **caractérisé en ce qu'**un revêtement qui se situe dans la plage allant de 1 à 200 mg/m² uniquement au regard du titane et/ou du zirconium, calculé en tant que titane, est formé avec la composition.

11. Procédé selon l'une quelconque des revendications précédentes, **caractérisé en ce qu'**un revêtement ayant un poids de couche qui, uniquement au regard des siloxanes/polysiloxanes, se situe dans la plage allant de 0,2 à 1 000 mg/m² est formé avec la composition, calculé sous la forme du polysiloxane correspondant essentiellement entièrement condensé.

12. Procédé selon l'une quelconque des revendications précédentes, **caractérisé en ce que** le revêtement fabriqué avec la composition aqueuse est ensuite revêtu avec au moins un agent primaire, un vernis, un adhésif et/ou avec une composition organique analogue à un vernis, au moins un de ces revêtements supplémentaires étant éventuellement durci par chauffage et/ou exposition à un rayonnement.

13. Composition aqueuse pour le revêtement de surfaces métalliques, **caractérisée en ce que** la composition comprend :
a) au moins un composé a) choisi parmi les silanes, les silanols, les siloxanes et les polysiloxanes, la composition présentant une teneur en silane/silanol/siloxane/polysiloxane dans la plage allant de 0,02 à 2 g/l, calculée sur la base des silanols correspondants,
b) au moins un composé b) contenant du titane, du hafnium, du zirconium, de l'aluminium et/ou du bore, au moins l'un d'eux étant un fluorure complexe, la composition présentant une teneur en composés b) dans la plage allant de 0,1 à 5 g/l, calculée en tant que somme des métaux correspondants,
c) les cations de manganèse et/ou au moins un composé c) correspondant, la composition présentant une teneur en cations de manganèse et/ou composé c) correspondant dans la plage allant de 0,08 à 0,3 g/l, calculée en tant que manganèse
ainsi qu'au moins une substance d) choisie parmi :
d₁) l'aminoguanidine,
d₂) les anions de nitrite et/ou les composés contenant au moins un groupe nitro,
d₃) les composés à base de peroxyde et
d₄) les composés contenant du phosphore, les anions d'au moins un phosphate et/ou les anions d'au moins un phosphonate, et comprend également
e) de l'eau,
la teneur en tous les types de substances d) étant dans la plage allant de 0,01 à 25 g/l,
la composition présentant une teneur en nitrate dans la plage allant de 0,1 à 5 g/l.

14. Utilisation des substrats métalliques revêtus selon le procédé selon l'une quelconque des revendications 1 à 12 dans l'industrie automobile, pour des véhicules ferroviaires, dans l'industrie aérospatiale et astronautique, dans la fabrication d'équipements, dans la fabrication de machines, dans le bâtiment, dans l'industrie des meubles, pour la fabrication de glissières de sécurité, de lampes, de profilés, d'habillages ou de petites pièces, pour la fabrication de carrosseries ou de parties de carrosseries, de composants individuels, d'éléments prémontés ou reliés, pour la fabrication d'appareils ou d'unités, notamment d'appareils ménagers, de dispositifs de contrôle, de dispositifs de test ou d'éléments de construction.
